# EUROPEAN PATENT APPLICATION

(11) **EP 4 429 347 A1**
(43) Date of publication of application: **11.09.2024**
(21) Application number: 22889284.0
(22) Date of filing: 01.11.2022
(51) Int. Cl.: H04W 72/00, H04L 5/00

(54) **TRANSMISSION PARAMETER DETERMINATION METHOD AND DEVICE, RESOURCE DETERMINATION METHOD AND DEVICE, AND STORAGE MEDIUM**

(30) Priority: 03.11.2021 CN 202111295141
(71) Applicant: Vivo Mobile Communication Co., Ltd., Dongguan, Guangdong 523863 (CN)
(72) Inventor: SUN, Rongrong, Dongguan, Guangdong 523863 (CN); SONG, Yang, Dongguan, Guangdong 523863 (CN)
(74) Representative: Conti, Marco
(86) International application number: PCT/CN2022/129061
(87) International publication number: WO 2023/078261

(57) **Abstract**

This application provides a transmission parameter determining method, a resource determining method, a device, and a storage medium, and pertains to the field of communications technologies. The transmission parameter determining method of embodiments of the invention includes: receiving, by a terminal, DCI, where the DCI is used for activating a target CG, or the DCI is used for scheduling a physical uplink shared channel PUSCH for data of the target CG, and the target CG includes a plurality of sets of transmission parameters; and determining, by the terminal, according to the DCI, a target transmission parameter for the target CG or the PUSCH from the plurality of sets of transmission parameters.

## Description

### CROSS-REFERENCE TO RELATED APPLICATIONS

This application claims priority to Chinese Patent Application No. 202111295141.7, filed in China on November 3, 2021, which is incorporated herein by reference in its entirety.

### TECHNICAL FIELD

This application pertains to the field of communication technologies, and specifically, relates to a transmission parameter determining method, a resource determining method, a device, and a storage medium.

### BACKGROUND

Configured grant (configured grant, CG) transmission is a low-latency and low-overhead transmission scheme that has been adopted and standardized in some communications systems. In these communications systems, each CG corresponds to one set of transmission parameters, and for a CG, a terminal can use only one set of transmission parameters corresponding to that CG for transmission, which leads to relatively poor transmission flexibility for the terminal.

### SUMMARY

Embodiments of this application provide a transmission parameter determining method, a resource determining method, a device, and a storage medium, so as to resolve the problem of poor transmission flexibility of the terminal.

According to a first aspect, an embodiment of this application provides a transmission parameter determining method, including:
receiving, by a terminal, downlink control information (Downlink Control Information, DCI), where the DCI is used for activating a target CG, or the DCI is used for scheduling a physical uplink shared channel (Physical uplink shared channel, PUSCH) for data of the target CG, and the target CG includes a plurality of sets of transmission parameters; and
determining, by the terminal, according to the DCI, a target transmission parameter for the target CG or the PUSCH from the plurality of sets of transmission parameters.

According to a second aspect, an embodiment of this application provides a resource determining method, including:
receiving, by a terminal, DCI, where the DCI is used for scheduling PUSCH transmission, and the DCI includes a plurality of sounding reference signal resource indicator (Sounding Reference Signal resource indicator, SRI) fields; and
determining, by the terminal based on the plurality of SRI fields, a sounding reference signal (Sounding Reference Signal, SRS) resource corresponding to the PUSCH transmission.

According to a third aspect, an embodiment of this application provides a transmission parameter determining method, including:
sending, by a network-side device, DCI to a terminal, where the DCI is used for activating a target configured grant CG or the DCI is used for scheduling a PUSCH for data of the target CG, and the target CG includes a plurality of sets of transmission parameters; and
determining, by the network-side device, according to the DCI from the plurality of sets of transmission parameters, a target transmission parameter to be used by the terminal for the target CG or the PUSCH.

According to a fourth aspect, an embodiment of this application provides a resource determining method, including:
sending, by a network-side device, downlink control information DCI to a terminal, where the DCI is used for scheduling physical uplink shared channel PUSCH transmission, the DCI includes a plurality of sounding reference signal resource indicator SRI fields, and the plurality of SRI fields are used for determining a sounding reference signal SRS resource corresponding to the PUSCH transmission.

According to a fifth aspect, an embodiment of this application provides a transmission parameter determining apparatus, including:
a first receiving module, configured to receive DCI, where the DCI is used for activating a target configured grant CG or the DCI is used for scheduling a PUSCH for data of the target CG, and the target CG includes a plurality of sets of transmission parameters; and
a first determining module, configured to determine, according to the DCI, a target transmission parameter for the target CG or the PUSCH from the plurality of sets of transmission parameters.

According to a sixth aspect, an embodiment of this application provides a resource determining apparatus, including:
a receiving module, configured to receive DCI, where the DCI is used for scheduling physical uplink shared channel PUSCH transmission, and the DCI includes a plurality of sounding reference signal resource indicator SRI fields; and
a determining module, configured to determine, based on the plurality of SRI fields, an SRS resource corresponding to the PUSCH transmission.

According to a seventh aspect, an embodiment of this application provides a transmission parameter determining apparatus, including:
a first sending module, configured to send DCI to a terminal, where the DCI is used for activating a target configured grant CG or the DCI is used for scheduling a PUSCH for data of the target CG, and the target CG includes a plurality of sets of transmission parameters; and
a determining module, configured to determine, according to the DCI from the plurality of sets of transmission parameters, a target transmission parameter to be used by the terminal for the target CG or the PUSCH.

According to an eighth aspect, an embodiment of this application provides a resource determining apparatus, including:
a sending module, configured to downlink control information DCI to a terminal, where the DCI is used for scheduling physical uplink shared channel PUSCH transmission, the DCI includes a plurality of sounding reference signal resource indicator SRI fields, and the plurality of SRI fields are used for determining a sounding reference signal SRS resource corresponding to the PUSCH transmission.

According to a ninth aspect, an embodiment of this application provides a terminal, including a memory, a processor, and a program or instructions stored in the memory and capable of running on the processor, and when the program or the instructions are executed by the processor, the steps of the transmission parameter determining method of the terminal side according to the embodiments of this application are implemented; or when the program or the instructions are executed by the processor, the steps of the resource determining method of the terminal side according to the embodiments of this application are implemented.

According to a tenth aspect, an embodiment of this application provides a terminal, including a processor and a communication interface, where the communication interface is configured to receive DCI, where the DCI is used for activating a target configured grant CG or the DCI is used for scheduling a PUSCH for data of the target CG, and the target CG includes a plurality of sets of transmission parameters; and the processor or the communication interface is configured to determine, according to the DCI, a target transmission parameter for the target CG or the PUSCH from the plurality of sets of transmission parameters; or the communication interface is configured to receive downlink control information DCI, where the DCI is used for scheduling physical uplink shared channel PUSCH transmission, and the DCI includes a plurality of sounding reference signal resource indicator SRI fields; and the processor or the communication interface is configured to determine, based on the plurality of SRI fields, an SRS resource corresponding to the PUSCH transmission.

According to an eleventh aspect, an embodiment of this application provides a network-side device, including a memory, a processor, and a program or instructions stored in the memory and capable of running on the processor, and when the program or the instructions are executed by the processor, the steps of the transmission parameter determining method of the network-side device side according to the embodiments of this application are implemented; or when the program or the instructions are executed by the processor, the steps of the resource determining method of the network-side device side according to the embodiments of this application are implemented.

According to a twelfth aspect, an embodiment of this application provides a network-side device, including a processor and a communication interface, where the communication interface is configured to send DCI to a terminal, where the DCI is used for activating a target configured grant CG or the DCI is used for scheduling a PUSCH for data of the target CG, and the target CG includes a plurality of sets of transmission parameters; and the processor or the communication interface is configured to determine, according to the DCI from the plurality of sets of transmission parameters, a target transmission parameter to be used by the terminal for the target CG or the PUSCH; or the communication interface is configured to send downlink control information DCI to a terminal, where the DCI is used for scheduling physical uplink shared channel PUSCH transmission, the DCI includes a plurality of sounding reference signal resource indicator SRI fields, and the plurality of SRI fields are used for determining a sounding reference signal SRS resource corresponding to the PUSCH transmission.

According to a thirteenth aspect, an embodiment of this application provides a readable storage medium, where a program or instructions are stored in the readable storage medium. When the program or the instructions are executed by a processor, the steps of the transmission parameter determining method of the terminal side according to the embodiments of this application are implemented, or when the program or the instructions are executed by the processor, the steps of the resource determining method of the terminal side according to the embodiments of this application are implemented; or when the program or the instructions are executed by the processor, the steps of the transmission parameter determining method of the network-side device side according to the embodiments of this application are implemented; or when the program or the instructions are executed by the processor, the steps of the resource determining method of the network-side device side according to the embodiments of this application are implemented.

According to a fourteenth aspect, a chip is provided, where the chip includes a processor and a communication interface, the communication interface is coupled to the processor, and the processor is configured to run a program or instructions to implement the steps of the transmission parameter determining method of the terminal side according to the embodiments of this application, or the steps of the resource determining method of the terminal side according to the embodiments of this application, or the steps of the transmission parameter determining method of the network-side device side according to the embodiments of this application, or the steps of the resource determining method of the network-side device side according to the embodiments of this application.

According to a fifteenth aspect, a computer program/program product is provided, where the computer program/program product is stored in a storage medium, and the computer program/program product is executed by at least one processor to implement the steps of the transmission parameter determining method of the terminal side according to the embodiments of this application, or the steps of the resource determining method of the terminal side according to the embodiments of this application, or the steps of the transmission parameter determining method of the network-side device side according to the embodiments of this application, or the steps of the resource determining method of the network-side device side according to the embodiments of this application.

According to a sixteenth aspect, a communication device is provided, configured to execute the steps of the transmission parameter determining method of the terminal side according to the embodiments of this application, or the steps of the resource determining method of the terminal side according to the embodiments of this application, or the steps of the transmission parameter determining method of the network-side device side according to the embodiments of this application, or the steps of the resource determining method of the network-side device side according to the embodiments of this application.

In the embodiments of this application, the terminal receives the DCI, where the DCI is used for activating the target configured grant CG or the DCI is used for scheduling the PUSCH for the data of the target CG, where the target CG includes a plurality of sets of transmission parameters. The terminal determines the target transmission parameter for the target CG or the PUSCH from the plurality of sets of transmission parameters according to the DCI. In this way, the terminal is supported to determine the target transmission parameter for the target CG or PUSCH from the plurality of sets of transmission parameters, thereby improving transmission flexibility of the terminal.

### BRIEF DESCRIPTION OF DRAWINGS

FIG. 1 is a block diagram of a wireless communications system to which the embodiments of this application are applicable;
FIG. 2 is a flowchart of a transmission parameter determining method according to an embodiment of this application;
FIG. 3 is a flowchart of a resource determining method according to an embodiment of this application;
FIG. 4 is a flowchart of another transmission parameter determining method according to an embodiment of this application;
FIG. 5 is a flowchart of another resource determining method according to an embodiment of this application;
FIG. 6 is a structural diagram of a transmission parameter determining apparatus according to an embodiment of this application;
FIG. 7 is a structural diagram of a resource determining apparatus according to an embodiment of this application;
FIG. 8 is a structural diagram of another transmission parameter determining apparatus according to an embodiment of this application;
FIG. 9 is a structural diagram of another resource determining apparatus according to an embodiment of this application;
FIG. 10 is a structural diagram of a communication device according to an embodiment of this application;
FIG. 11 is a structural diagram of a terminal according to an embodiment of this application; and
FIG. 12 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

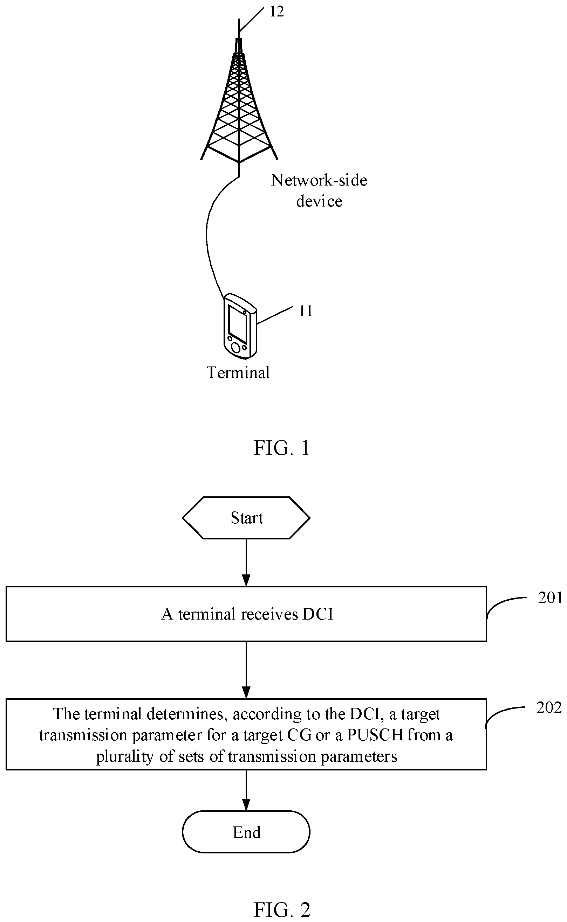

FIG. 1 is a block diagram of a wireless communications system to which the embodiments of this application are applicable. The wireless communications system includes a terminal 11 and a network-side device 12.

The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), and a smart home device (a home device with wireless communication function, such as refrigerator, TV, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application.

The network-side device 12 may be a core network element or a base station, where the core network element may be an access and mobility management function (Access and Mobility Management Function, AMF), a mobility management entity (Mobility Management Entity, MME), and the like. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, WiFi) node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a transmission parameter determining method, a resource determining method, a device, and a storage medium provided in the embodiments of this application by using specific embodiments and application scenarios thereof with reference to the accompanying drawings.

Referring to FIG. 2, FIG. 2 is a flowchart of a transmission parameter determining method according to an embodiment of this application. As shown in FIG. 2, the method includes the following steps.

Step 201: A terminal receives DCI, where the DCI is used for activating a target CG or the DCI is used for scheduling a PUSCH for data of the target CG, and the target CG includes a plurality of sets of transmission parameters.

The DCI is DCI sent by the network-side device and received by the terminal, and the DCI is activation DCI or scheduling DCI, specifically being used for activating the target CG or used for scheduling the PUSCH for the data of the target CG. The PUSCH may be a retransmission PUSCH or an initial transmission PUSCH. The retransmission PUSCH may be: a PUSCH scheduled by DCI that is received by the terminal and that has cyclic redundancy check (Cyclic Redundancy Check, CRC) scrambled by a configured scheduling radio network temporary identifier (Configured Scheduling Radio Network Temporary Identifier, CS-RNTI) and has a new data indicator (New Data Indicator, NDI) of 1 (DCI with CRC scrambled with CS-RNTI and NDI = 1), that is, the DCI is DCI for scheduling the retransmission PUSCH for the CG.

In some implementations, the DCI may be DCI format (DCI format) 0_1, DCI format 0_2, or other DCI formats, which is not limited.

The target CG may be one or more CGs explicitly or implicitly indicated by the DCI. For example, the target CG is a CG explicitly or implicitly indicated by the DCI from at least one CG obtained in advance by the terminal, where the at least one CG obtained in advance by the terminal may be at least one CG configured for the terminal by the network side before execution of step 201.

That the target CG includes a plurality of sets of transmission parameters may be: the target CG includes a plurality of sets of transmission parameters related to uplink transmission, and each set of transmission parameters may include at least one of the following transmission parameters: spatial relation, power control parameter, resource, precoding, the number of layers, and the like.

Step 202: The terminal determines, according to the DCI, a target transmission parameter for the target CG or the PUSCH from the plurality of sets of transmission parameters.

The target transmission parameter may be a transmission parameter explicitly or implicitly indicated by the DCI. The target transmission parameter for the target CG or the retransmission PUSCH is a transmission parameter used by the terminal for the target CG or the PUSCH.

In this embodiment of this application, through the foregoing steps, it can be implemented that the terminal is supported to determine the target transmission parameter for the target CG or the PUSCH from the plurality of sets of transmission parameters, thereby improving transmission flexibility for the terminal.

In an optional implementation, any one set of transmission parameters in the plurality of sets of transmission parameters includes at least one of the following:
a target received power parameter for control information transmitted on a configured grant (i.e. uci-OnPUSCH);
a closed loop power control adjustment index (powerControlLoopToUse);
a target received power and path loss compensation factor (p0-PUSCH-Alpha);
precoding and the number of layers (precodingAndNumberOfLayers);
an SRS resource indicator (srs-ResourceIndicator); and
a path loss reference index (pathlossReferenceIndex).

That any one set of transmission parameters in the plurality of sets of transmission parameters includes at least one of the foregoing items may be understood as: each set of transmission parameters in the plurality of sets of transmission parameters includes at least one of the foregoing items, not limited to each set of transmission parameters including a same type of transmission parameter. For example, one set of transmission parameters includes the foregoing six items; and another set of transmission parameters may include only part of the foregoing six items, such as the target received power parameter for control information transmitted on a configured grant, and the target received power and path loss compensation factor, and other transmission parameters may be configured in other manners or use default parameters, or the like.

In an optional implementation, the method further includes:
receiving, by the terminal, a configuration delivered by a network side, where the configuration includes at least one of the following:
an SRS resource set configured for a first DCI format;
an SRS resource set configured for a second DCI format; and
at least one CG; where
the DCI is in the first DCI format or the second DCI format; and
the target CG is a CG in the at least one CG.

The configuration may be a dynamic, static, or semi-static configuration on the network side.

The SRS resource set configured for the first DCI format may include one or more SRS resource sets, and the SRS resource set configured for the second DCI format may include one or more SRS resource sets.

Each CG in the at least one CG includes a plurality of sets of transmission parameters.

In this implementation, due to the SRS resource set configured for the first DCI format and the SRS resource set configured for the second DCI format, the terminal can be then supported to send uplink transmission to the network side through activation or usage of different DCI formats.

For example, in a multi-TRP (multi-TRP, MTRP) scenario, configuring a plurality of SRS resource sets can be expressed as uplink transmission being allowed to be sent to two TRPs. For flexibility of the configuration, different quantities of SRS resource sets can be configured for different DCI formats to implement that a single TRP and a plurality of TRPs can be scheduled by different DCI formats.

In some implementations, the first DCI format may be DCI format 0_1 and the second DCI format may be DCI format 0_2, or the first DCI format may be DCI format 0_2 and the second DCI format may be DCI format 0_1, which is not specifically limited. For example, when the number of SRS resource sets configured for DCI format 0_1 and DCI format 0_2 is different, for example, two SRS resource sets are configured for DCI format 0_1, one SRS resource set is configured for DCI format 0_2, and two sets of transmission parameters included in the CG configuration are respectively associated with two SRS resource sets. In this case, if the terminal receives the DCI in the format of 0_2 for activating a CG or for scheduling retransmission of data of the CG, transmission parameters for the activated CG use the 1st set of transmission parameters in the two sets of transmission parameters, and parameters for scheduling retransmission PUSCH for data of the CG use the 2nd set of transmission parameters in the two sets of transmission parameters.

In an optional implementation, the plurality of sets of transmission parameters are respectively associated with a plurality of SRS resource sets, and
the plurality of SRS resource sets include at least one of the following:
an SRS resource set configured for the first DCI format; and
an SRS resource set configured for the second DCI format.

The association between the plurality of sets of transmission parameters and the plurality of SRS resource sets may be that one set of transmission parameters corresponds to one SRS resource set.

The association relation between the plurality of sets of transmission parameters and the plurality of SRS resource sets may be pre-configured, or dynamically, statically or semi-statically configured by the network side.

In this implementation, it can be implemented that the transmission parameter is associated with the SRS resource set, so that the transmission parameter can be used to perform CG transmission for SRS resources of its associated SRS resource set, thereby improving transmission reliability.

Optionally, in a case that a plurality of SRS resource sets are configured for the first DCI format and one SRS resource set is configured for the second DCI format, the one SRS resource set configured for the second DCI format includes N SRS resources in a reference SRS resource set, where the reference SRS resource set is: the 1 st SRS resource set in the plurality of SRS resource sets configured for the first DCI format; and/or
in a case that a target SRS resource set is configured for the first DCI format and a plurality of SRS resource sets are configured for the second DCI format, the 1 st SRS resource set configured for the second DCI format includes N SRS resources in the target SRS resource set, where
N is an integer greater than or equal to 1.

The N SRS resources in the reference SRS resource set may be the first N SRS resources in the reference SRS resource set, where the first N SRS resources here may be the first N SRS resources sorted by index or the first N resources sorted by resource. This also holds true for the N SRS resources in the target SRS resource set, which is not described herein again.

The target SRS resource set can be understood as the SRS resource set configured for the first DCI format, such as one SRS resource set configured for the first DCI format, or the 1st SRS resource set in the plurality of SRS resource sets configured for the first DCI format.

In this implementation, it can be implemented that some SRS resources are the same between the SRS resource set configured for the first DCI format and the SRS resource set configured for the second DCI format, so as to reduce the number of SRS resources, thereby reducing transmission complexity of the terminal.

Optionally, transmission parameters for one SRS resource set configured for the second DCI format are partially or completely the same as transmission parameters for the reference SRS resource set; and/or
transmission parameters for the 1st SRS resource set configured for the second DCI format are partially or completely the same as transmission parameters for the target SRS resource set.

The transmission parameters may include a power control parameter.

In this implementation, it can be implemented that a same transmission parameter is present between the SRS resource set configured for the first DCI format and the SRS resource set configured for the second DCI format, so as to ensure that a same SRS resource can have a same set of transmission parameters.

For example, if two SRS resource sets are configured for the first DCI format and one SRS resource set is configured for the second DCI format, the one SRS resource set configured for the second DCI format is the 1st SRS resource set of the two SRS resource sets configured for the first DCI format, that is, including the first N SRS resources, power control parameters, and the like of the 1st SRS resource set.

For another example, if one SRS resource set is configured for the first DCI format and two SRS resource sets are configured for the second DCI format, the 1 st SRS resource set in the two SRS resource sets configured for the second DCI format is the one SRS resource set configured for the first DCI format, that is, including the first N SRS resources, power control parameters, and the like of the 1st SRS resource set.

Optionally, the one SRS resource set configured for the second DCI format and the reference SRS resource set are activated simultaneously; and/or
the 1 st SRS resource set configured for the second DCI format and the target SRS resource set are activated simultaneously.

Being simultaneously activated may indicate that when one SRS resource set is activated, the other SRS resource set is simultaneously activated.

In this implementation, one SRS resource set configured for the second DCI format and the reference SRS resource set are activated simultaneously, and the 1st SRS resource set configured for the second DCI format and the target SRS resource set are activated simultaneously, thereby reducing activation overheads.

Optionally, the 1st SRS resource set in the plurality of SRS resource sets configured for the first DCI format includes SRS resources with the largest number of first SRS ports, and the SRS resources with the largest number of first SRS ports are SRS resources with the largest number of SRS ports in the plurality of SRS resource sets configured for the first DCI format; and/or
the 1st SRS resource set in the plurality of SRS resource sets configured for the second DCI format includes SRS resources with the largest number of second SRS ports, and the SRS resources with the largest number of second SRS ports are SRS resources with the largest number of SRS ports in the plurality of SRS resource sets configured for the second DCI format.

In this implementation, it can be implemented that the 1st SRS resource set includes SRS resources with the largest number of SRS ports in the plurality of SRS resource sets.

Optionally, the 1st SRS resource set in the plurality of SRS resource sets configured for the first DCI format is an SRS resource set with a smallest SRS resource set index in the plurality of SRS resource sets configured for the first DCI format; or in a case that one SRS resource set is configured for the first DCI format, the 1st SRS resource set in the SRS resource sets configured for the first DCI format is the one SRS resource set configured for the first DCI format; and/or
the 1st SRS resource set in the plurality of SRS resource sets configured for the second DCI format is an SRS resource set with a smallest SRS resource set index in the plurality of SRS resource sets configured for the second DCI format; or in a case that one SRS resource set is configured for the second DCI format, the 1 st SRS resource set in the SRS resource sets configured for the second DCI format is the one SRS resource set configured for the second DCI format.

In this implementation, the 1st SRS resource set can be determined by index, or in a case that only one SRS resource set is configured, the 1st SRS resource set is this one SRS resource set.

In an optional implementation, the method further includes:
receiving, by the terminal, a media access control control element (Medium Access Control Control Element, MAC CE); and
determining, by the terminal, at least one of the following based on the MAC CE:
   a spatial relation for SRS resources in the SRS resource set configured for the first DCI format; and
   a spatial relation for SRS resources in the SRS resource set configured for the second DCI format.

The MAC CE is a MAC CE sent by the network-side device and received by the terminal.

The spatial relation for SRS resources may refer to a specific signal for a reference space beam during SRS transmission by the terminal.

The MAC CE may be a MAC CE for activating the SRS resource set or a MAC CE for indicating the spatial relation.

The determining, by the terminal, at least one of the following based on the MAC CE may be updating the at least one item based on the MAC CE, that is, determining the latest spatial relation, or determining the at least one item according to an indication of the MAC CE, that is, determining an indicated spatial relation. The updating described above may be updating based on spatial relation information carried in the MAC CE, or may be updating according to a pre-configured updating rule, which is not specifically limited.

In this implementation, it can be implemented that the spatial relation for SRS resources is determined in a timely manner, thus making the resource configuration more flexible.

Optionally, the MAC CE includes at least one of the following:
an index of the SRS resource set configured for the first DCI format; and
an index of the SRS resource set configured for the second DCI format.

In this implementation, it can be implemented that an SRS resource set for which a spatial relation needs to be determined may be indicated by using an index.

It should be noted that this embodiment of this application is not limited to inclusion of the foregoing index in the MAC CE, for example, in some implementations, a spatial relation for SRS resources in all or part of the SRS resource sets can be updated by default, or the MAC CE implicitly indicates an SRS resource set that needs to be updated.

Optionally, spatial relations of SRS resources with a same index in the SRS resource set configured for the first DCI format and the SRS resource set configured for the second DCI format are determined simultaneously.

In this implementation, overheads for the MAC CE can be reduced by simultaneously determining the spatial relations of the SRS resources with the same index. For example, when the terminal receives a MAC CE carrying an index of any one resource set in the SRS resource set configured for the first DCI format and the SRS resource set configured for the second DCI format, spatial information of SRS resources with the same index in the first SRS resource set and the second SRS resource set can be determined based on the MAC CE.

In an optional implementation, the DCI includes a plurality of transmitted precoding matrix indicator (Transmitted Precoding Matrix Indicator, TPMI) fields, where
a length of a first TPMI field in the plurality of TPMI fields is determined based on a largest number of SRS ports in a plurality of SRS resource sets configured for the DCI; and
a length of a second TPMI field in the plurality of TPMI fields is determined based on a largest number of ports for a preset SRS resource set in the plurality of SRS resource sets configured for the DCI.

The plurality of TPMI fields may be two or more TPMI fields.

The first TPMI field in the plurality of TPMI fields may be the 1st TPMI field in the plurality of TPMI fields sorted by index or location, and the second TPMI field in the plurality of TPMI fields may be the 2nd TPMI field in the plurality of TPMI fields sorted by index or location.

The plurality of SRS resource sets configured for the DCI may be a plurality of SRS resource sets configured for the DCI format of the DCI, for example, the DCI is in the first DCI format, and the plurality of SRS resource sets are a plurality of SRS resource sets configured for the first DCI format.

The length of the first TPMI field being determined based on the largest number of SRS ports in the plurality of SRS resource sets configured for the DCI may be that the length of the first TPMI field matches the largest number of SRS ports in the plurality of SRS resource sets. The determining rule may be specified by the protocol or configured by the network side.

The length of the second TPMI field being determined based on the largest number of ports for the preset SRS resource set in the plurality of SRS resource sets configured for the DCI may be that the length of the second TPMI field matches the largest number of ports for the preset SRS resource set in the plurality of SRS resource sets configured for the DCI. The determining rule may be specified by the protocol or configured by the network side.

The preset SRS resource set may be the 2nd SRS resource set in the plurality of SRS resource sets. For the 2nd SRS resource in the plurality of SRS resource sets, refer to the corresponding description of the foregoing implementation. Details are not described herein again.

In this implementation, the DCI includes a plurality of TMPI fields, the length of the first TPMI field is determined based on the largest number of SRS ports in the plurality of SRS resource sets, and the length of the second TPMI field is determined based on the largest number of ports for the preset SRS resource set in the plurality of SRS resource sets; therefore, it can be ensured that the length of the first TPMI field in the plurality of TMPI fields is sufficient to select precoding from the codebook corresponding to the largest number of ports, thereby improving flexibility of precoding indication.

In an optional implementation, the determining, by the terminal, according to the DCI, a target transmission parameter for the target CG or the PUSCH from the plurality of sets of transmission parameters includes at least one of the following:
in a case that the DCI includes a target field, determining, by the terminal, that a transmission parameter indicated by the target field in the plurality of sets of transmission parameters is the target transmission parameter for the target CG or the PUSCH; and
in a case that the DCI does not include the target field, determining that a preset transmission parameter in the plurality of sets of transmission parameters is the target transmission parameter for the target CG or the PUSCH.

The target field may be a field indicating a transmission parameter.

For the transmission parameters indicated by the target field in the plurality of sets of transmission parameters, refer to an indication mode shown in Table 1. Table 1 is as follows:

| Target field | Parameter determining |
|---|---|
| 00 | 1st set of parameters for CG configuration (associated with the 1st SRS resource set) |
| 01 | 2nd set of parameters for CG configuration (associated with the 2nd SRS resource set) |
| 10 | Two sets of parameters for CG configuration |
| 11 | Two sets of parameters for CG configuration |

The target field may alternatively be a field indicating an SRS resource set, two sets of parameters for the CG configuration are associated with two SRS resource sets, and a transmission parameter is further indicated by indicating a resource set.

In the implementation of Table 1 above, if the CG configuration contains only one set of parameters, or if the CG configuration contains a plurality of sets of parameters, and the DCI for activating the CG indicates using only one set of parameters for CG transmission, a first target field is 00.

Through the foregoing Table 1, it can be implemented that the transmission parameter for the CG is determined based on the target field, and whether a parameter for the PUSCH of the CG uses a plurality of sets of transmission parameters or one set of transmission parameters, and uses a specific transmission parameter of the plurality of sets of transmission parameters is determined.

It should be noted that the foregoing Table 1 is only one example, and in this embodiment of this application, this is not limited to a manner in which the target field indicates the transmission parameter.

The preset transmission parameter is a pre-specified transmission parameter or a transmission parameter determined according to a pre-specified rule. For example, the preset transmission parameter includes one of the following:
the 1st set of transmission parameters in the plurality of sets of transmission parameters;
transmission parameters associated with the 1st SRS resource set in the plurality of sets of transmission parameters; and
a transmission parameter indicated by the DCI in the plurality of sets of transmission parameters.

The 1st set of transmission parameters is transmission parameters with the first index in the plurality of sets of transmission parameters, or is the 1st set of transmission parameters determined according to a configuration sequence or according to a position sequence in configuration signaling.

The 1st SRS resource set is the 1st SRS resource set in the SRS resource set configured for the DCI format of the DCI.

Optionally, the method further includes:
determining, by the terminal, whether the DCI includes the target field, based on the number of SRS resource sets configured for a DCI format of the DCI.

In this implementation, it can be implemented that whether the DCI includes the target field may be configured based on the number of SRS resource sets configured for the DCI format.

For example, in a case that the number of SRS resource sets configured for the DCI format of the DCI is a preset quantity, it is determined that the DCI includes the target field; or
in a case that the number of SRS resource sets configured for the DCI format of the DCI is not a preset quantity, it is determined that the DCI does not include the target field. The target field being not included herein may alternatively be that the length of the target field is 0 bits.

The preset quantity may be a quantity such as 2 or 3.

It should be noted that in this embodiment of this application, whether to include the target field may alternatively be directly determined according to the DCI format of the DCI. In a case that the DCI includes the target field, the terminal determines that the transmission parameter indicated by the target field in the plurality of sets of transmission parameters is the target transmission parameter for the target CG or the PUSCH; and in a case that DCI does not include the target field, the terminal determines that the preset transmission parameter in the plurality of sets of transmission parameters is the target transmission parameter for the target CG or the PUSCH.

In this embodiment of this application, the terminal receives the target downlink control information DCI, where the DCI is used for activating the target configured grant CG or the DCI is used for scheduling the retransmission physical uplink shared channel PUSCH for the data of the target CG, where the target CG includes a plurality of sets of transmission parameters. The terminal determines the target transmission parameter for the target CG or the retransmission PUSCH from the plurality of sets of transmission parameters according to the DCI. In this way, the terminal is supported to determine the target transmission parameter for the target CG or the retransmission PUSCH from the plurality of sets of transmission parameters, thereby improving transmission flexibility of the terminal.

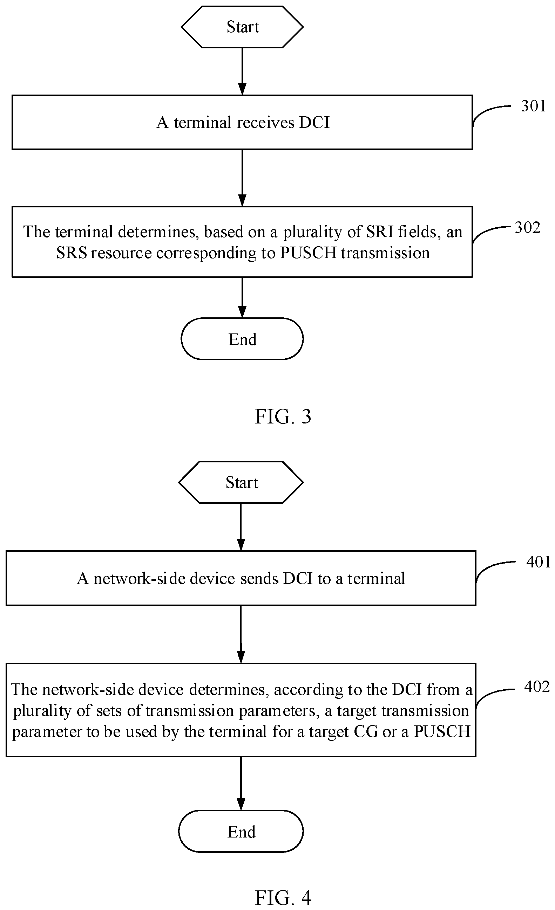

Referring to FIG. 3, FIG. 3 is a flowchart of a resource determining method according to an embodiment of this application. As shown in FIG. 3, the method includes the following steps.

Step 301: A terminal receives DCI, where that DCI is used for scheduling PUSCH transmission, and the DCI includes a plurality of SRI fields.

The DCI may be the DCI in the embodiment shown in FIG. 2, or may not be the DCI in the embodiment shown in FIG. 2.

The PUSCH transmission is the PUSCH transmission in the embodiment shown in FIG. 2, or may not be the PUSCH transmission in the embodiment shown in FIG. 2.

The plurality of SRI fields may indicate different SRS resources.

Step 302: The terminal determines, based on the plurality of SRI fields, an SRS resource corresponding to the PUSCH transmission.

That the terminal determines, based on the plurality of SRI fields, an SRS resource corresponding to the PUSCH transmission may be determining an SRS resource indicated by each SRI field.

In this embodiment of this application, through the foregoing steps, it can be implemented that the SRS resource corresponding to the PUSCH transmission is determined based on the plurality of SRI fields, so as to support PUSCH transmission using the SRS resource indicated by the plurality of SRI fields. This improves reliability of PUSCH transmission and resolves the problem of relatively low reliability of PUSCH transmission.

Optionally, the plurality of SRI fields include: a first SRI field and a second SRI field;
an SRS resource indicated by the first SRI field is an SRS resource in an SRS resource set corresponding to the first SRI field, where the SRS resource is closest to a target resource and is to be transmitted before the target resource;
an SRS resource indicated by the second SRI field is an SRS resource in an SRS resource set corresponding to the second SRI field, where the SRS resource is closest to the target resource and is to be transmitted before the target resource; and
the target resource is a transmission resource for the DCI.

The first SRI field and the second SRI field may be the 1 st SRI field and the 2nd SRI field in the DCI, where the 1st SRI field and the 2nd SRI field may be determined according to a position sequence in the DCI.

For the first SRI field, the target resource can be understood as a physical downlink control channel (Physical downlink control channel, PDCCH) resource for the DCI carrying the first SRI field. For the second SRI field, the target resource can be understood as a PDCCH resource for the DCI carrying the second SRI field. Alternatively, the target resource may be a PDCCH resource for the DCI carrying the first SRI field and the second SRI field

In this implementation, the SRS resource indicated by the SRI field is an SRS resource in the SRS resource set corresponding to the SRI field, where the SRS resource is closest to the target resource and is to be transmitted before the target resource, so that the terminal can determine the latest SRS resource for PUSCH transmission, improving reliability of parameters for PUSCH transmission.

Optionally, the SRS resource set corresponding to the first SRI field is an SRS resource set indicated by a target field in the DCI; and
the SRS resource set corresponding to the second SRI field is a preset SRS resource set.

Indicating the SRS resource set by using the target field may be an indication manner shown in Table 2, where the Table 2 is as follows:

| Target field | Parameter determining |
|---|---|
| 00/10/11 | 1st SRS resource set |
| 01 | 2nd SRS resource set |

The 1st SRS resource set indicated by 00/10/11 is an SRS resource set corresponding to the first SRI field, and the 2nd SRS resource set indicated by 01 is an SRS resource set corresponding to the first SRI field.

It should be noted that the target field shown in Table 2 may be the target field in the embodiment shown in FIG. 2, that is, the target field in the DCI may indicate a transmission parameter or may indicate an SRS resource set. In addition, in some implementations, the target field in this embodiment may be different from the target field in the embodiment shown in FIG. 2, for example, the target field in this embodiment may be one bit.

The preset SRS resource set is a predefined SRS resource set in the SRS resource set corresponding to the DCI, for example, the 2nd SRS resource set or the 1st SRS resource set in the SRS resource set corresponding to the DCI. For the 1st SRS resource set and the 2nd SRS resource set, refer to the related descriptions of the embodiment shown in FIG. 2. Details are not repeated herein.

In this implementation, it can be implemented that only one SRS resource set needs to be indicated in the DCI, thus reducing DCI overheads.

For example, when the terminal receives the DCI, if the DCI contains two SRI fields, the 2nd SRI field corresponds to an SRS resource in the 2nd SRS resource set closest to the target resource, and the 1st SRI field corresponds to an SRS resource in the target SRS resource set closest to the target resource. The target SRS resource set is the 1st or 2nd SRS resource set, and the target resource set may be determined by an indication field in the DCI.

Optionally, a plurality of SRS resource sets are pre-configured for the terminal, and the SRS resource set corresponding to the first SRI field is an SRS resource set, indicated by a target field of the DCI, in the plurality of SRS resource sets; and
the SRS resource set corresponding to the second SRI field is a preset SRS resource set in the plurality of SRS resource sets.

In this implementation, it can be implemented that the DCI needs to indicate only one SRS resource set in a case of corresponding to a plurality of SRS resource sets, thereby reducing DCI overheads.

In this embodiment of this application, the terminal receives the DCI, where the DCI is used for scheduling PUSCH transmission, and the DCI includes a plurality of SRI fields. The terminal determines the SRS resource corresponding to the PUSCH transmission based on the plurality of SRI fields. In this way, it can be implemented that the SRS resource corresponding to the PUSCH transmission is determined based on the plurality of SRI fields, so as to support PUSCH transmission using the SRS resource indicated by the plurality of SRI fields, thereby improving reliability of PUSCH transmission.

Referring to FIG. 4, FIG. 4 is a flowchart of a transmission parameter determining method according to an embodiment of this application. As shown in FIG. 4, the method includes the following steps.

Step 401: A network-side device sends DCI to a terminal, where the DCI is used for activating a target configured grant CG or the DCI is used for scheduling a PUSCH for data of the target CG, and the target CG includes a plurality of sets of transmission parameters.

Step 402: The network-side device determines, according to the DCI from the plurality of sets of transmission parameters, a target transmission parameter to be used by the terminal for the target CG or the PUSCH.

Optionally, the method further includes:
delivering, by the network-side device, a configuration to the terminal, where the configuration includes at least one of the following:
an SRS resource set configured for a first DCI format;
an SRS resource set configured for a second DCI format; and
at least one configured grant CG; where
the DCI is in the first DCI format or the second DCI format; and
the target CG is a CG in the at least one CG.

Optionally, the plurality of sets of transmission parameters are respectively associated with a plurality of sounding reference signal SRS resource sets, and
the plurality of SRS resource sets include at least one of the following:
an SRS resource set configured for the first DCI format; and
an SRS resource set configured for the second DCI format.

Optionally, in a case that a plurality of SRS resource sets are configured for the first DCI format and one SRS resource set is configured for the second DCI format, the one SRS resource set configured for the second DCI format includes N SRS resources in a reference SRS resource set, where the reference SRS resource set is: the 1 st SRS resource set in the plurality of SRS resource sets configured for the first DCI format; and/or
in a case that a target SRS resource set is configured for the first DCI format and a plurality of SRS resource sets are configured for the second DCI format, the 1 st SRS resource set configured for the second DCI format includes N SRS resources in the target SRS resource set, where
N is an integer greater than or equal to 1.

Optionally, the method further includes:
sending, by the network-side device, a media access control control element MAC CE to the terminal; where
the MAC CE is used for determining at least one of the following:
   a spatial relation for SRS resources in the SRS resource set configured for the first DCI format; and
   a spatial relation for SRS resources in the SRS resource set configured for the second DCI format.

Optionally, the MAC CE includes at least one of the following:
an index of the SRS resource set configured for the first DCI format; and
an index of the SRS resource set configured for the second DCI format.

Optionally, spatial relations of SRS resources with a same index in the SRS resource set configured for the first DCI format and the SRS resource set configured for the second DCI format are determined simultaneously.

Optionally, transmission parameters for one SRS resource set configured for the second DCI format are partially or completely the same as transmission parameters for the reference SRS resource set; and/or
transmission parameters for the 1st SRS resource set configured for the second DCI format are partially or completely the same as transmission parameters for the target SRS resource set.

Optionally, the 1st SRS resource set in the plurality of SRS resource sets configured for the first DCI format includes SRS resources with the largest number of first SRS ports, and the SRS resources with the largest number of first SRS ports are SRS resources with the largest number of SRS ports in the plurality of SRS resource sets configured for the first DCI format; and/or
the 1st SRS resource set in the plurality of SRS resource sets configured for the second DCI format includes SRS resources with the largest number of second SRS ports, and the SRS resources with the largest number of second SRS ports are SRS resources with the largest number of SRS ports in the plurality of SRS resource sets configured for the second DCI format.

Optionally, the 1st SRS resource set in the plurality of SRS resource sets configured for the first DCI format is an SRS resource set with a smallest SRS resource set index in the plurality of SRS resource sets configured for the first DCI format; or in a case that one SRS resource set is configured for the first DCI format, the 1st SRS resource set in the SRS resource sets configured for the first DCI format is the one SRS resource set configured for the first DCI format; and/or
the 1st SRS resource set in the plurality of SRS resource sets configured for the second DCI format is an SRS resource set with a smallest SRS resource set index in the plurality of SRS resource sets configured for the second DCI format; or in a case that one SRS resource set is configured for the second DCI format, the 1st SRS resource set in the SRS resource sets configured for the second DCI format is the one SRS resource set configured for the second DCI format.

Optionally, the DCI includes a plurality of transmitted precoding matrix indicator TPMI fields; where
a length of a first TPMI field in the plurality of TPMI fields is determined based on a largest number of SRS ports in a plurality of SRS resource sets configured for the DCI; and
a length of a second TPMI field in the plurality of TPMI fields is determined based on a largest number of ports for a preset SRS resource set in the plurality of SRS resource sets configured for the DCI.

Optionally, the determining, by the network-side device, according to the DCI from the plurality of sets of transmission parameters, a target transmission parameter to be used by the terminal for the target CG or the PUSCH includes at least one of the following:
in a case that the DCI includes a target field, determining, by the network-side device, that a transmission parameter indicated by the target field in the plurality of sets of transmission parameters is the target transmission parameter to be used by the terminal for the target CG or the PUSCH; and
in a case that the DCI does not include the target field, determining, by the network-side device, that a preset transmission parameter in the plurality of sets of transmission parameters is the target transmission parameter to be used by the terminal for the target CG or the PUSCH.

Optionally, the preset transmission parameter includes one of the following:
the 1st set of transmission parameters in the plurality of sets of transmission parameters;
transmission parameters associated with the 1st SRS resource set in the plurality of sets of transmission parameters; and
a transmission parameter indicated by the DCI in the plurality of sets of transmission parameters.

Optionally, any one set of transmission parameters in the plurality of sets of transmission parameters includes at least one of the following:
a target received power parameter for control information transmitted on a configured grant;
a closed loop power control adjustment index;
a target received power and path loss compensation factor;
precoding and the number of layers;
an SRS resource indicator; and
a path loss reference index.

It should be noted that this embodiment is an implementation of a network-side device corresponding to the embodiment shown in FIG. 2. For the specific implementation, reference may be made to the related description of the embodiment shown in FIG. 2. To avoid repeated descriptions, details are not repeated in this embodiment.

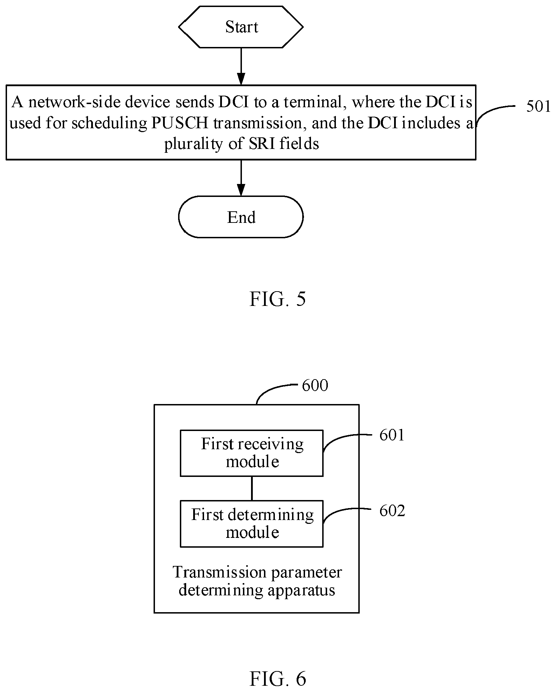

Referring to FIG. 5, FIG. 5 is a flowchart of a resource determining method according to an embodiment of this application. As shown in FIG. 5, the method includes the following step.

Step 501: A network-side device sends DCI to a terminal, where the DCI is used for scheduling PUSCH transmission, the DCI includes a plurality of SRI fields, and the plurality of SRI fields are used for determining SRS resources corresponding to the PUSCH transmission.

Optionally, the plurality of SRI fields include: a first SRI field and a second SRI field;
an SRS resource indicated by the first SRI field is an SRS resource in an SRS resource set corresponding to the first SRI field, where the SRS resource is closest to a target resource and is to be transmitted before the target resource;
an SRS resource indicated by the second SRI field is an SRS resource in an SRS resource set corresponding to the second SRI field, where the SRS resource is closest to the target resource and is to be transmitted before the target resource; and
the target resource is a transmission resource for the DCI.

Optionally, the SRS resource set corresponding to the first SRI field is an SRS resource set indicated by a target field in the DCI; and
the SRS resource set corresponding to the second SRI field is a preset SRS resource set.

Optionally, the network-side device pre-configures a plurality of SRS resource sets for the terminal, and the SRS resource set corresponding to the first SRI field is an SRS resource set, indicated by a target field of the DCI, in the plurality of SRS resource sets; and
the SRS resource set corresponding to the second SRI field is a preset SRS resource set in the plurality of SRS resource sets.

It should be noted that this embodiment is an implementation of a network-side device corresponding to the embodiment shown in FIG. 3. For the specific implementation, reference may be made to the related description of the embodiment shown in FIG. 3. To avoid repeated descriptions, details are not repeated in this embodiment.

Referring to FIG. 6, FIG. 6 is a structural diagram of a transmission parameter determining apparatus (i.e. a terminal) according to an embodiment of this application, as shown in FIG. 6, including:
a first receiving module 601, configured to receive target downlink control information DCI, where the DCI is used for activating a target configured grant CG, or the DCI is used for scheduling a physical uplink shared channel PUSCH for data of the target CG, and the target CG includes a plurality of sets of transmission parameters; and
a first determining module 602, configured to determine, according to the DCI, a target transmission parameter for the target CG or the PUSCH from the plurality of sets of transmission parameters.

Optionally, the terminal receives the target downlink control information DCI, where the DCI is used for activating a target configured grant CG, or the DCI is used for scheduling a physical uplink shared channel PUSCH for data of the target CG, and the target CG includes a plurality of sets of transmission parameters; and
the terminal determines, according to the DCI, a target transmission parameter for the target CG or the PUSCH from the plurality of sets of transmission parameters.

Optionally, the apparatus further includes:
a second receiving module, configured to receive a configuration delivered by a network side, where the configuration includes at least one of the following:
a sounding reference signal SRS resource set configured for a first DCI format;
an SRS resource set configured for a second DCI format; and
at least one CG; where
the DCI is in the first DCI format or the second DCI format; and
the target CG is a CG in the at least one CG.

Optionally, the plurality of sets of transmission parameters are respectively associated with a plurality of SRS resource sets, and
the plurality of SRS resource sets include at least one of the following:
an SRS resource set configured for the first DCI format; and
an SRS resource set configured for the second DCI format.

Optionally, in a case that a plurality of SRS resource sets are configured for the first DCI format and one SRS resource set is configured for the second DCI format, the one SRS resource set configured for the second DCI format includes N SRS resources in a reference SRS resource set, where the reference SRS resource set is: the 1st SRS resource set in the plurality of SRS resource sets configured for the first DCI format; and/or
in a case that a target SRS resource set is configured for the first DCI format and a plurality of SRS resource sets are configured for the second DCI format, the 1st SRS resource set configured for the second DCI format includes N SRS resources in the target SRS resource set, where
N is an integer greater than or equal to 1.

Optionally, the apparatus further includes:
a third receiving module, configured to receive a media access control control element MAC CE; and
a second determining module, configured to determine at least one of the following based on the MAC CE:
   a spatial relation for SRS resources in the SRS resource set configured for the first DCI format; and
   a spatial relation for SRS resources in the SRS resource set configured for the second DCI format.

Optionally, the MAC CE includes at least one of the following:
an index of the SRS resource set configured for the first DCI format; and
an index of the SRS resource set configured for the second DCI format.

Optionally, spatial relations of SRS resources with a same index in the SRS resource set configured for the first DCI format and the SRS resource set configured for the second DCI format are determined simultaneously.

Optionally, transmission parameters for one SRS resource set configured for the second DCI format are partially or completely the same as transmission parameters for the reference SRS resource set; and/or
transmission parameters for the 1st SRS resource set configured for the second DCI format are partially or completely the same as transmission parameters for the target SRS resource set.

Optionally, the one SRS resource set configured for the second DCI format and the reference SRS resource set are activated simultaneously; and/or
the 1st SRS resource set configured for the second DCI format and the target SRS resource set are activated simultaneously.

Optionally, the 1st SRS resource set in the plurality of SRS resource sets configured for the first DCI format includes SRS resources with the largest number of first SRS ports, and the SRS resources with the largest number of first SRS ports are SRS resources with the largest number of SRS ports in the plurality of SRS resource sets configured for the first DCI format; and/or
the 1st SRS resource set in the plurality of SRS resource sets configured for the second DCI format includes SRS resources with the largest number of second SRS ports, and the SRS resources with the largest number of second SRS ports are SRS resources with the largest number of SRS ports in the plurality of SRS resource sets configured for the second DCI format.

Optionally, the 1st SRS resource set in the plurality of SRS resource sets configured for the first DCI format is an SRS resource set with a smallest SRS resource set index in the plurality of SRS resource sets configured for the first DCI format; or in a case that one SRS resource set is configured for the first DCI format, the 1st SRS resource set in the SRS resource sets configured for the first DCI format is the one SRS resource set configured for the first DCI format; and/or
the 1st SRS resource set in the plurality of SRS resource sets configured for the second DCI format is an SRS resource set with a smallest SRS resource set index in the plurality of SRS resource sets configured for the second DCI format; or in a case that one SRS resource set is configured for the second DCI format, the 1 st SRS resource set in the SRS resource sets configured for the second DCI format is the one SRS resource set configured for the second DCI format.

Optionally, the DCI includes a plurality of transmitted precoding matrix indicator TPMI fields; where
a length of a first TPMI field in the plurality of TPMI fields is determined based on a largest number of SRS ports in a plurality of SRS resource sets configured for the DCI; and
a length of a second TPMI field in the plurality of TPMI fields is determined based on a largest number of ports for a preset SRS resource set in the plurality of SRS resource sets configured for the DCI.

Optionally, the first determining module 602 is configured to perform at least one of the following:
in a case that the DCI includes a target field, determining, for the terminal, that a transmission parameter indicated by the target field in the plurality of sets of transmission parameters is the target transmission parameter for the target CG or the PUSCH; and
in a case that the DCI does not include the target field, determining that a preset transmission parameter in the plurality of sets of transmission parameters is the target transmission parameter for the target CG or the PUSCH.

Optionally, the apparatus further includes:
a third determining module, configured to determine whether the DCI includes the target field, based on the number of SRS resource sets configured for a DCI format of the DCI.

Optionally, in a case that the number of SRS resource sets configured for the DCI format of the DCI is not a preset quantity, it is determined that the DCI does not include the target field; or
in a case that the number of SRS resource sets configured for the DCI format of the DCI is not a preset quantity, it is determined that the DCI does not include the target field.

Optionally, the preset transmission parameter includes one of the following:
the 1st set of transmission parameters in the plurality of sets of transmission parameters;
transmission parameters associated with the 1st SRS resource set in the plurality of sets of transmission parameters; and
a transmission parameter indicated by the DCI in the plurality of sets of transmission parameters.

Optionally, any one set of transmission parameters in the plurality of sets of transmission parameters includes at least one of the following:
a target received power parameter for control information transmitted on a configured grant;
a closed loop power control adjustment index;
a target received power and path loss compensation factor;
precoding and the number of layers;
an SRS resource indicator; and
a path loss reference index.

The terminal can improve transmission flexibility for the terminal.

The transmission parameter determining apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The transmission parameter determining apparatus provided in this embodiment of this application can implement the processes implemented in the method embodiment in FIG. 2, with the same technical effects achieved. To avoid repetition, details are not described herein again.

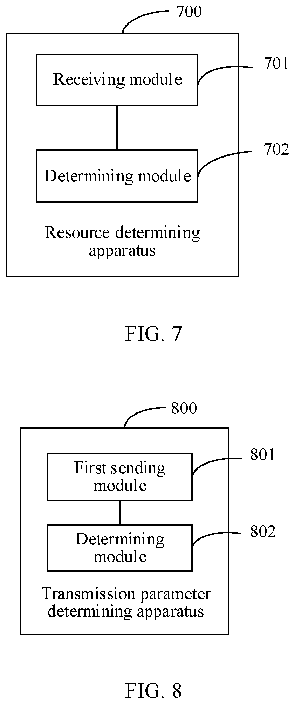

Referring to FIG. 7, FIG. 7 is a structural diagram of a resource determining apparatus according to an embodiment of this application, as shown in FIG. 7, including:
a receiving module 701, configured to receive downlink control information DCI, where that DCI is used for scheduling physical uplink shared channel PUSCH transmission, and the DCI includes a plurality of sounding reference signal resource indicator SRI fields; and
a determining module 702, configured to determine, based on the plurality of SRI fields, a sounding reference signal SRS resource corresponding to the PUSCH transmission.

Optionally, the plurality of SRI fields include: a first SRI field and a second SRI field;
an SRS resource indicated by the first SRI field is an SRS resource in an SRS resource set corresponding to the first SRI field, where the SRS resource is closest to a target resource and is to be transmitted before the target resource;
an SRS resource indicated by the second SRI field is an SRS resource in an SRS resource set corresponding to the second SRI field, where the SRS resource is closest to the target resource and is to be transmitted before the target resource; and
the target resource is a transmission resource for the DCI.

Optionally, the SRS resource set corresponding to the first SRI field is an SRS resource set indicated by a target field in the DCI; and
the SRS resource set corresponding to the second SRI field is a preset SRS resource set.

Optionally, a plurality of SRS resource sets are pre-configured for the terminal, and the SRS resource set corresponding to the first SRI field is an SRS resource set, indicated by a target field of the DCI, in the plurality of SRS resource sets; and
the SRS resource set corresponding to the second SRI field is a preset SRS resource set in the plurality of SRS resource sets.

The terminal can improve the transmission reliability of the terminal.

The resource determining apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The resource determining apparatus provided in this embodiment of this application is capable of implementing the processes implemented in the method embodiments in FIG. 3, with the same technical effects achieved. To avoid repetition, details are not described herein again.

Referring to FIG. 8, FIG. 8 is a structural diagram of a transmission parameter determining apparatus according to an embodiment of this application, as shown in FIG. 8, including:
a first sending module 801, configured to send target downlink control information DCI to a terminal, where the DCI is used for activating a target configured grant CG, or the DCI is used for scheduling a physical uplink shared channel PUSCH for data of the target CG, and the target CG includes a plurality of sets of transmission parameters; and
a determining module 802, configured to determine, according to the DCI from the plurality of sets of transmission parameters, a target transmission parameter to be used by the terminal for the target CG or the PUSCH.

Optionally, the apparatus further includes:
a second sending module, configured to deliver a configuration to the terminal, where the configuration includes at least one of the following:
an SRS resource set configured for a first DCI format;
an SRS resource set configured for a second DCI format; and
at least one configured grant CG; where
the DCI is in the first DCI format or the second DCI format; and
the target CG is a CG in the at least one CG.

Optionally, the plurality of sets of transmission parameters are respectively associated with a plurality of sounding reference signal SRS resource sets, and
the plurality of SRS resource sets include at least one of the following:
an SRS resource set configured for the first DCI format; and
an SRS resource set configured for the second DCI format.

Optionally, in a case that a plurality of SRS resource sets are configured for the first DCI format and one SRS resource set is configured for the second DCI format, the one SRS resource set configured for the second DCI format includes N SRS resources in a reference SRS resource set, where the reference SRS resource set is: the 1st SRS resource set in the plurality of SRS resource sets configured for the first DCI format; and/or
in a case that a target SRS resource set is configured for the first DCI format and a plurality of SRS resource sets are configured for the second DCI format, the 1st SRS resource set configured for the second DCI format includes N SRS resources in the target SRS resource set, where
N is an integer greater than or equal to 1.

Optionally, the apparatus further includes:
a third sending module, configured to send a media access control control element MAC CE to the terminal; where
the MAC CE is used for determining at least one of the following:
   a spatial relation for SRS resources in the SRS resource set configured for the first DCI format; and
   a spatial relation for SRS resources in the SRS resource set configured for the second DCI format.

Optionally, the MAC CE includes at least one of the following:
an index of the SRS resource set configured for the first DCI format; and
an index of the SRS resource set configured for the second DCI format.

Optionally, spatial relations of SRS resources with a same index in the SRS resource set configured for the first DCI format and the SRS resource set configured for the second DCI format are determined simultaneously.

Optionally, transmission parameters for one SRS resource set configured for the second DCI format are partially or completely the same as transmission parameters for the reference SRS resource set; and/or
transmission parameters for the 1st SRS resource set configured for the second DCI format are partially or completely the same as transmission parameters for the target SRS resource set.

Optionally, the 1st SRS resource set in the plurality of SRS resource sets configured for the first DCI format includes SRS resources with the largest number of first SRS ports, and the SRS resources with the largest number of first SRS ports are SRS resources with the largest number of SRS ports in the plurality of SRS resource sets configured for the first DCI format; and/or
the 1st SRS resource set in the plurality of SRS resource sets configured for the second DCI format includes SRS resources with the largest number of second SRS ports, and the SRS resources with the largest number of second SRS ports are SRS resources with the largest number of SRS ports in the plurality of SRS resource sets configured for the second DCI format.

Optionally, the 1st SRS resource set in the plurality of SRS resource sets configured for the first DCI format is an SRS resource set with a smallest SRS resource set index in the plurality of SRS resource sets configured for the first DCI format; or in a case that one SRS resource set is configured for the first DCI format, the 1st SRS resource set in the SRS resource sets configured for the first DCI format is the one SRS resource set configured for the first DCI format; and/or
the 1st SRS resource set in the plurality of SRS resource sets configured for the second DCI format is an SRS resource set with a smallest SRS resource set index in the plurality of SRS resource sets configured for the second DCI format; or in a case that one SRS resource set is configured for the second DCI format, the 1st SRS resource set in the SRS resource sets configured for the second DCI format is the one SRS resource set configured for the second DCI format.

Optionally, the DCI includes a plurality of transmitted precoding matrix indicator TPMI fields; where
a length of a first TPMI field in the plurality of TPMI fields is determined based on a largest number of SRS ports in a plurality of SRS resource sets configured for the DCI; and
a length of a second TPMI field in the plurality of TPMI fields is determined based on a largest number of ports for a preset SRS resource set in the plurality of SRS resource sets configured for the DCI.

Optionally, the determining, by the network-side device, according to the DCI from the plurality of sets of transmission parameters, a target transmission parameter to be used by the terminal for the target CG or the PUSCH includes at least one of the following:
in a case that the DCI includes a target field, determining, by the network-side device, that a transmission parameter indicated by the target field in the plurality of sets of transmission parameters is the target transmission parameter to be used by the terminal for the target CG or the PUSCH; and
in a case that the DCI does not include the target field, determining, by the network-side device, that a preset transmission parameter in the plurality of sets of transmission parameters is the target transmission parameter to be used by the terminal for the target CG or the PUSCH.

Optionally, the preset transmission parameter includes one of the following:
the 1st set of transmission parameters in the plurality of sets of transmission parameters;
transmission parameters associated with the 1st SRS resource set in the plurality of sets of transmission parameters; and
a transmission parameter indicated by the DCI in the plurality of sets of transmission parameters.

Optionally, any one set of transmission parameters in the plurality of sets of transmission parameters includes at least one of the following:
a target received power parameter for control information transmitted on a configured grant;
a closed loop power control adjustment index;
a target received power and path loss compensation factor;
precoding and the number of layers;
an SRS resource indicator; and
a path loss reference index.

The network-side device can improve the transmission reliability of the terminal.

The transmission parameter determining apparatus in this embodiment of this application may be an apparatus, or an apparatus or electric device having an operating system, or may be a component, an integrated circuit, or a chip in the network-side device. The apparatus or the network-side device may be a base station.

The transmission parameter determining apparatus provided in this embodiment of this application can implement the processes implemented in the method embodiment in FIG. 4, with the same technical effects achieved. To avoid repetition, details are not described herein again.

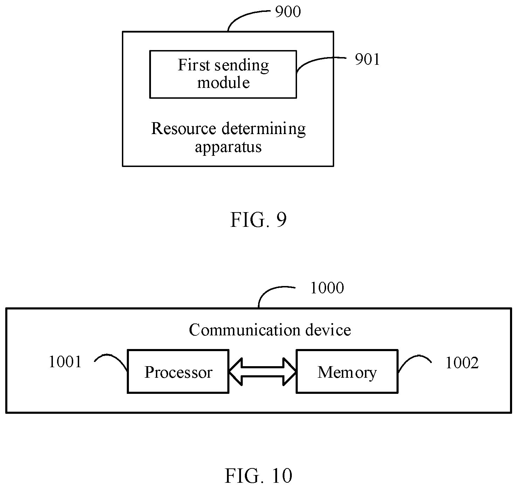

Referring to FIG. 9, FIG. 9 is a structural diagram of a resource determining apparatus according to an embodiment of this application, as shown in FIG. 9, including:
a sending module 901, configured to downlink control information DCI to a terminal, where the DCI is used for scheduling physical uplink shared channel PUSCH transmission, the DCI includes a plurality of sounding reference signal resource indicator SRI fields, and the plurality of SRI fields are used for determining a sounding reference signal SRS resource corresponding to the PUSCH transmission.

Optionally, the plurality of SRI fields include: a first SRI field and a second SRI field;
an SRS resource indicated by the first SRI field is an SRS resource in an SRS resource set corresponding to the first SRI field, where the SRS resource is closest to a target resource and is to be transmitted before the target resource;
an SRS resource indicated by the second SRI field is an SRS resource in an SRS resource set corresponding to the second SRI field, where the SRS resource is closest to the target resource and is to be transmitted before the target resource; and
the target resource is a transmission resource for the DCI.

Optionally, the SRS resource set corresponding to the first SRI field is an SRS resource set indicated by a target field in the DCI; and
the SRS resource set corresponding to the second SRI field is a preset SRS resource set.

Optionally, the network-side device pre-configures a plurality of SRS resource sets for the terminal, and the SRS resource set corresponding to the first SRI field is an SRS resource set, indicated by a target field of the DCI, in the plurality of SRS resource sets; and
the SRS resource set corresponding to the second SRI field is a preset SRS resource set in the plurality of SRS resource sets.

The network-side device can improve the reliability of PUSCH transmission.

The resource determining apparatus in this embodiment of this application may be an apparatus, or an apparatus or electric device having an operating system, or may be a component, an integrated circuit, or a chip in the network-side device. The apparatus or the network-side device may be a base station.

The resource determining apparatus provided in this embodiment of this application is capable of implementing the processes implemented in the method embodiments in FIG. 5, with the same technical effects achieved. To avoid repetition, details are not described herein again.

Optionally, as shown in FIG. 10, an embodiment of this application further provides a communication device 1000, including a processor 1001, a memory 1002, and a program or instructions stored in the memory 1002 and capable of running on the processor 1001. For example, when the communication device 1000 is a terminal and when the program or the instructions are executed by the processor 1001, the processes of the foregoing embodiments of the transmission parameter determining method or the resource determining method are implemented, with the same technical effects achieved. When the communication device 1000 is a network-side device and when the program or the instructions are executed by the processor 1001, the processes of the foregoing embodiments of the transmission parameter determining method or the resource determining method on the network-side device side are implemented, with the same technical effects achieved. To avoid repetition, details are not described herein again. The communication device is a terminal or a network-side device.

An embodiment of this application further provides a communication device, including a processor and a communication interface, where the communication interface is configured to receive DCI, where the DCI is used for activating a target configured grant CG or the DCI is used for scheduling a PUSCH for data of the target CG, and the target CG includes a plurality of sets of transmission parameters; and the processor or the communication interface is configured to determine, according to the DCI, a target transmission parameter for the target CG or the PUSCH from the plurality of sets of transmission parameters; orthe communication interface is configured to receive downlink control information DCI, where the DCI is used for scheduling physical uplink shared channel PUSCH transmission, and the DCI includes a plurality of sounding reference signal resource indicator SRI fields; and the processor or the communication interface is configured to determine, based on the plurality of SRI fields, an SRS resource corresponding to the PUSCH transmission.

Alternatively, the communication interface is configured to send DCI to a terminal, where the DCI is used for activating a target configured grant CG or the DCI is used for scheduling a PUSCH for data of the target CG, and the target CG includes a plurality of sets of transmission parameters; and the processor or the communication interface is configured to determine, according to the DCI from the plurality of sets of transmission parameters, a target transmission parameter to be used by the terminal for the target CG or the PUSCH; or the communication interface is configured to send downlink control information DCI to a terminal, where the DCI is used for scheduling physical uplink shared channel PUSCH transmission, the DCI includes a plurality of sounding reference signal resource indicator SRI fields, and the plurality of SRI fields are used for determining a sounding reference signal SRS resource corresponding to the PUSCH transmission.

The communication device embodiments correspond to the method embodiments shown in FIG. 2 to FIG. 5, and the implementation processes and implementations of the foregoing method embodiments can be applied to the communication device embodiments, with the same technical effects achieved.

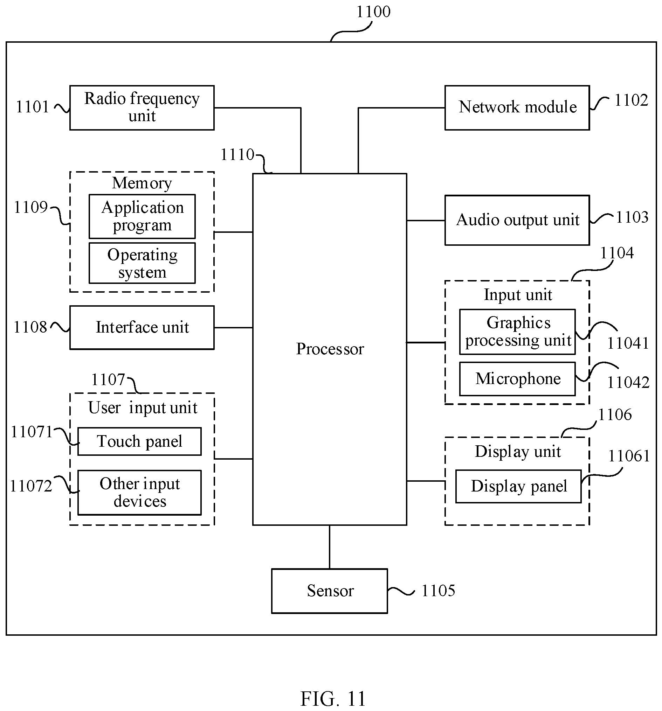

Specifically, FIG. 11 is a schematic diagram of a hardware structure of a terminal for implementing the embodiments of this application.

The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the terminal shown in FIG. 2 does not constitute any limitation on the communication device. The terminal may include more or fewer components than shown in the figure, or a combination of some components, or the components disposed differently. Details are not described herein again.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 may include a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, the radio frequency unit 1101 receives downlink data from a network-side device, and then sends the downlink data to the processor 1110 for processing; and also sends uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 1109 may include a program or instruction storage area and a data storage area. The program or instruction storage area may store an operating system, an application program or instruction required by at least one function (for example, a sound playback function or an image playback function), and the like. In addition, the memory 1109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 1110 may include one or more processing units. Optionally, an application processor and a modem processor may be integrated in the processor 1110. This application processor primarily processes an operating system, user interfaces, application programs or instructions, and the like. The modem processor primarily processes radio communication, for example, being a baseband processor. It can be understood that the modem processor may alternatively be not integrated in the processor 1110.

In one embodiment, the radio frequency unit 1101 is configured to receive target downlink control information DCI, where the DCI is used for activating a target configured grant CG, or the DCI is used for scheduling a physical uplink shared channel PUSCH for data of the target CG, and the target CG includes a plurality of sets of transmission parameters; and
the radio frequency unit 1101 or the processor 1110 is configured to determine, according to the DCI, a target transmission parameter for the target CG or the PUSCH from the plurality of sets of transmission parameters.

Optionally, the radio frequency unit 1101 is further configured to:
receive, for the terminal, a configuration delivered by a network side, where the configuration includes at least one of the following:
a sounding reference signal SRS resource set configured for a first DCI format;
an SRS resource set configured for a second DCI format; and
at least one CG; where
the DCI is in the first DCI format or the second DCI format; and
the target CG is a CG in the at least one CG.

Optionally, the plurality of sets of transmission parameters are respectively associated with a plurality of SRS resource sets, and
the plurality of SRS resource sets include at least one of the following:
an SRS resource set configured for the first DCI format; and
an SRS resource set configured for the second DCI format.

Optionally, in a case that a plurality of SRS resource sets are configured for the first DCI format and one SRS resource set is configured for the second DCI format, the one SRS resource set configured for the second DCI format includes N SRS resources in a reference SRS resource set, where the reference SRS resource set is: the 1st SRS resource set in the plurality of SRS resource sets configured for the first DCI format; and/or
in a case that a target SRS resource set is configured for the first DCI format and a plurality of SRS resource sets are configured for the second DCI format, the 1st SRS resource set configured for the second DCI format includes N SRS resources in the target SRS resource set, where
N is an integer greater than or equal to 1.

Optionally, the radio frequency unit 1101 is further configured to: receive a media access control control element MAC CE.

The radio frequency unit 1101 or the processor 1110 is configured to determine at least one of the following based on the MAC CE:
a spatial relation for SRS resources in the SRS resource set configured for the first DCI format; and
a spatial relation for SRS resources in the SRS resource set configured for the second DCI format.

Optionally, the MAC CE includes at least one of the following:
an index of the SRS resource set configured for the first DCI format; and
an index of the SRS resource set configured for the second DCI format.

Optionally, spatial relations of SRS resources with a same index in the SRS resource set configured for the first DCI format and the SRS resource set configured for the second DCI format are determined simultaneously.

Optionally, transmission parameters for one SRS resource set configured for the second DCI format are partially or completely the same as transmission parameters for the reference SRS resource set; and/or
transmission parameters for the 1st SRS resource set configured for the second DCI format are partially or completely the same as transmission parameters for the target SRS resource set.

Optionally, the one SRS resource set configured for the second DCI format and the reference SRS resource set are activated simultaneously; and/or
the 1st SRS resource set configured for the second DCI format and the target SRS resource set are activated simultaneously.

Optionally, the 1st SRS resource set in the plurality of SRS resource sets configured for the first DCI format includes SRS resources with the largest number of first SRS ports, and the SRS resources with the largest number of first SRS ports are SRS resources with the largest number of SRS ports in the plurality of SRS resource sets configured for the first DCI format; and/or
the 1st SRS resource set in the plurality of SRS resource sets configured for the second DCI format includes SRS resources with the largest number of second SRS ports, and the SRS resources with the largest number of second SRS ports are SRS resources with the largest number of SRS ports in the plurality of SRS resource sets configured for the second DCI format.

Optionally, the 1st SRS resource set in the plurality of SRS resource sets configured for the first DCI format is an SRS resource set with a smallest SRS resource set index in the plurality of SRS resource sets configured for the first DCI format; or in a case that one SRS resource set is configured for the first DCI format, the 1st SRS resource set in the SRS resource sets configured for the first DCI format is the one SRS resource set configured for the first DCI format; and/or
the 1st SRS resource set in the plurality of SRS resource sets configured for the second DCI format is an SRS resource set with a smallest SRS resource set index in the plurality of SRS resource sets configured for the second DCI format; or in a case that one SRS resource set is configured for the second DCI format, the 1st SRS resource set in the SRS resource sets configured for the second DCI format is the one SRS resource set configured for the second DCI format.

Optionally, the DCI includes a plurality of transmitted precoding matrix indicator TPMI fields; where
a length of a first TPMI field in the plurality of TPMI fields is determined based on a largest number of SRS ports in a plurality of SRS resource sets configured for the DCI; and
a length of a second TPMI field in the plurality of TPMI fields is determined based on a largest number of ports for a preset SRS resource set in the plurality of SRS resource sets configured for the DCI.

Optionally, the determining, according to the DCI, a target transmission parameter for the target CG or the PUSCH from the plurality of sets of transmission parameters includes at least one of the following:
in a case that the DCI includes a target field, determining that a transmission parameter indicated by the target field in the plurality of sets of transmission parameters is the target transmission parameter for the target CG or the PUSCH; and
in a case that the DCI does not include the target field, determining that a preset transmission parameter in the plurality of sets of transmission parameters is the target transmission parameter for the target CG or the PUSCH.

Optionally, the radio frequency unit 1101 or the processor 1110 is further configured to:
determine, based on the number of SRS resource sets configured for a DCI format of the DCI, whether the DCI includes the target field.

Optionally, in a case that the number of SRS resource sets configured for the DCI format of the DCI is not a preset quantity, it is determined that the DCI does not include the target field; or
in a case that the number of SRS resource sets configured for the DCI format of the DCI is not a preset quantity, it is determined that the DCI does not include the target field.

Optionally, the preset transmission parameter includes one of the following:
the 1st set of transmission parameters in the plurality of sets of transmission parameters;
transmission parameters associated with the 1st SRS resource set in the plurality of sets of transmission parameters; and
a transmission parameter indicated by the DCI in the plurality of sets of transmission parameters.

Optionally, any one set of transmission parameters in the plurality of sets of transmission parameters includes at least one of the following:
a target received power parameter for control information transmitted on a configured grant;
a closed loop power control adjustment index;
a target received power and path loss compensation factor;
precoding and the number of layers;
an SRS resource indicator; and
a path loss reference index.

The terminal can improve transmission flexibility for the terminal.

In one embodiment, the radio frequency unit 1101 is configured to receive downlink control information DCI, where that DCI is used for scheduling physical uplink shared channel PUSCH transmission, and the DCI includes a plurality of sounding reference signal resource indicator SRI fields; and
the radio frequency unit 1101 or the processor 1110 is further configured to determine, based on the plurality of SRI fields, a sounding reference signal SRS resource corresponding to the PUSCH transmission.

Optionally, the plurality of SRI fields include: a first SRI field and a second SRI field;
an SRS resource indicated by the first SRI field is an SRS resource in an SRS resource set corresponding to the first SRI field, where the SRS resource is closest to a target resource and is to be transmitted before the target resource;
an SRS resource indicated by the second SRI field is an SRS resource in an SRS resource set corresponding to the second SRI field, where the SRS resource is closest to the target resource and is to be transmitted before the target resource; and
the target resource is a transmission resource for the DCI.

Optionally, the SRS resource set corresponding to the first SRI field is an SRS resource set indicated by a target field in the DCI; and
the SRS resource set corresponding to the second SRI field is a preset SRS resource set.

Optionally, a plurality of SRS resource sets are pre-configured for the terminal, and the SRS resource set corresponding to the first SRI field is an SRS resource set, indicated by a target field of the DCI, in the plurality of SRS resource sets; and
the SRS resource set corresponding to the second SRI field is a preset SRS resource set in the plurality of SRS resource sets.

The terminal can improve the reliability of PUSCH transmission.

Specifically, the terminal in this embodiment of the present invention further includes: instructions or a program stored in the memory 1109 and capable of running on the processor 1110. The processor 1110 invokes the instructions or program in the memory 1109 to execute the method executed by the modules shown in FIG. 6 or FIG. 7, with the same technical effects achieved. To avoid repetition, details are not repeated herein.

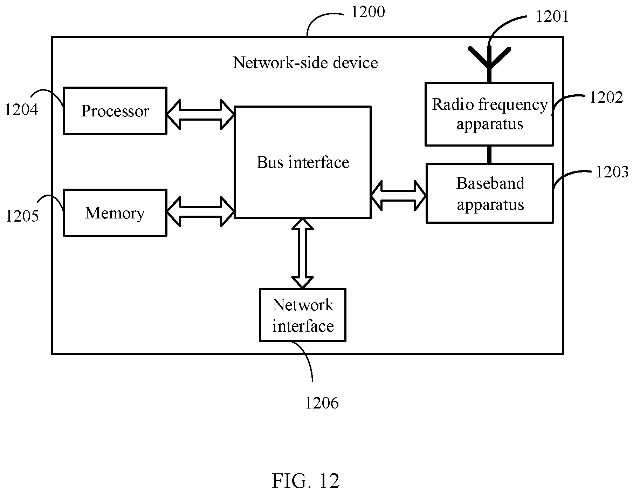

Specifically, an embodiment of this application further provides a network-side device. As shown in FIG. 12, the network-side device 1200 includes an antenna 1201, a radio frequency apparatus 1202, and a baseband apparatus 1203. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out by using the antenna 1201.

The frequency band processing apparatus may be located in the baseband apparatus 1203. The method performed by the network-side device in the foregoing embodiments may be implemented in the baseband apparatus 1203, and the baseband apparatus 1203 includes a processor 1204 and a memory 1205.

The baseband apparatus 1203 may include, for example, at least one baseband processing unit, where a plurality of chips are disposed on the baseband processing unit. As shown in FIG. 12, one of the chips is, for example, the processor 1204, connected to the memory 1205, to invoke a program in the memory 1205 to perform the operation of the network device shown in the foregoing method embodiment.

The baseband apparatus 1203 may further include a network interface 1206, configured to exchange information with the radio frequency apparatus 1202, where the interface is, for example, a common public radio interface (common public radio interface, CPRI for short).

In one embodiment, the radio frequency apparatus 1202 is configured to send DCI to a terminal, where the DCI is used for activating a target configured grant CG, or the DCI is used for scheduling a physical uplink shared channel PUSCH for data of the target CG, and the target CG includes a plurality of sets of transmission parameters; and
the radio frequency apparatus 1202 or the processor 1204 is configured to determine, according to the DCI from the plurality of sets of transmission parameters, a target transmission parameter to be used by the terminal for the target CG or the PUSCH.

Optionally, the radio frequency apparatus 1202 is further configured to:
deliver, for the network-side device, a configuration to the terminal, where the configuration includes at least one of the following:
an SRS resource set configured for a first DCI format;
an SRS resource set configured for a second DCI format; and
at least one configured grant CG; where
the DCI is in the first DCI format or the second DCI format; and
the target CG is a CG in the at least one CG.

Optionally, the plurality of sets of transmission parameters are respectively associated with a plurality of sounding reference signal SRS resource sets, and
the plurality of SRS resource sets include at least one of the following:
an SRS resource set configured for the first DCI format; and
an SRS resource set configured for the second DCI format.

Optionally, in a case that a plurality of SRS resource sets are configured for the first DCI format and one SRS resource set is configured for the second DCI format, the one SRS resource set configured for the second DCI format includes N SRS resources in a reference SRS resource set, where the reference SRS resource set is: the 1st SRS resource set in the plurality of SRS resource sets configured for the first DCI format; and/or
in a case that a target SRS resource set is configured for the first DCI format and a plurality of SRS resource sets are configured for the second DCI format, the 1st SRS resource set configured for the second DCI format includes N SRS resources in the target SRS resource set, where
N is an integer greater than or equal to 1.

Optionally, the radio frequency apparatus 1202 is further configured to:
send a media access control control element MAC CE to the terminal; where
the MAC CE is used for determining at least one of the following:
   a spatial relation for SRS resources in the SRS resource set configured for the first DCI format; and
   a spatial relation for SRS resources in the SRS resource set configured for the second DCI format.

Optionally, the MAC CE includes at least one of the following:
an index of the SRS resource set configured for the first DCI format; and
an index of the SRS resource set configured for the second DCI format.

Optionally, spatial relations of SRS resources with a same index in the SRS resource set configured for the first DCI format and the SRS resource set configured for the second DCI format are determined simultaneously.

Optionally, transmission parameters for one SRS resource set configured for the second DCI format are partially or completely the same as transmission parameters for the reference SRS resource set; and/or
transmission parameters for the 1st SRS resource set configured for the second DCI format are partially or completely the same as transmission parameters for the target SRS resource set.

Optionally, the 1st SRS resource set in the plurality of SRS resource sets configured for the first DCI format includes SRS resources with the largest number of first SRS ports, and the SRS resources with the largest number of first SRS ports are SRS resources with the largest number of SRS ports in the plurality of SRS resource sets configured for the first DCI format; and/or
the 1st SRS resource set in the plurality of SRS resource sets configured for the second DCI format includes SRS resources with the largest number of second SRS ports, and the SRS resources with the largest number of second SRS ports are SRS resources with the largest number of SRS ports in the plurality of SRS resource sets configured for the second DCI format.

Optionally, the 1st SRS resource set in the plurality of SRS resource sets configured for the first DCI format is an SRS resource set with a smallest SRS resource set index in the plurality of SRS resource sets configured for the first DCI format; or in a case that one SRS resource set is configured for the first DCI format, the 1st SRS resource set in the SRS resource sets configured for the first DCI format is the one SRS resource set configured for the first DCI format; and/or
the 1st SRS resource set in the plurality of SRS resource sets configured for the second DCI format is an SRS resource set with a smallest SRS resource set index in the plurality of SRS resource sets configured for the second DCI format; or in a case that one SRS resource set is configured for the second DCI format, the 1st SRS resource set in the SRS resource sets configured for the second DCI format is the one SRS resource set configured for the second DCI format.

Optionally, the DCI includes a plurality of transmitted precoding matrix indicator TPMI fields; where
a length of a first TPMI field in the plurality of TPMI fields is determined based on a largest number of SRS ports in a plurality of SRS resource sets configured for the DCI; and
a length of a second TPMI field in the plurality of TPMI fields is determined based on a largest number of ports for a preset SRS resource set in the plurality of SRS resource sets configured for the DCI.

Optionally, the determining, according to the DCI from the plurality of sets of transmission parameters, a target transmission parameter to be used by the terminal for the target CG or the PUSCH includes at least one of the following:
in a case that the DCI includes a target field, determining that a transmission parameter indicated by the target field in the plurality of sets of transmission parameters is the target transmission parameter to be used by the terminal for the target CG or the PUSCH; and
in a case that the DCI does not include the target field, determining that a preset transmission parameter in the plurality of sets of transmission parameters is the target transmission parameter to be used by the terminal for the target CG or the PUSCH.

Optionally, the preset transmission parameter includes one of the following:
the 1st set of transmission parameters in the plurality of sets of transmission parameters;
transmission parameters associated with the 1st SRS resource set in the plurality of sets of transmission parameters; and
a transmission parameter indicated by the DCI in the plurality of sets of transmission parameters.

Optionally, any one set of transmission parameters in the plurality of sets of transmission parameters includes at least one of the following:
a target received power parameter for control information transmitted on a configured grant;
a closed loop power control adjustment index;
a target received power and path loss compensation factor;
precoding and the number of layers;
an SRS resource indicator; and
a path loss reference index.

The network-side device can improve the transmission reliability of the terminal.

In another embodiment, the radio frequency apparatus 1202 is configured to downlink control information DCI to a terminal, where the DCI is used for scheduling physical uplink shared channel PUSCH transmission, the DCI includes a plurality of sounding reference signal resource indicator SRI fields, and the plurality of SRI fields are used for determining a sounding reference signal SRS resource corresponding to the PUSCH transmission.

Optionally, the plurality of SRI fields include: a first SRI field and a second SRI field;
an SRS resource indicated by the first SRI field is an SRS resource in an SRS resource set corresponding to the first SRI field, where the SRS resource is closest to a target resource and is to be transmitted before the target resource;
an SRS resource indicated by the second SRI field is an SRS resource in an SRS resource set corresponding to the second SRI field, where the SRS resource is closest to the target resource and is to be transmitted before the target resource; and
the target resource is a transmission resource for the DCI.

Optionally, the SRS resource set corresponding to the first SRI field is an SRS resource set indicated by a target field in the DCI; and
the SRS resource set corresponding to the second SRI field is a preset SRS resource set.

Optionally, the network-side device pre-configures a plurality of SRS resource sets for the terminal, and the SRS resource set corresponding to the first SRI field is an SRS resource set, indicated by a target field of the DCI, in the plurality of SRS resource sets; and
the SRS resource set corresponding to the second SRI field is a preset SRS resource set in the plurality of SRS resource sets.

The network-side device can improve the reliability of PUSCH transmission.

Specifically, the network-side device in this embodiment of the present invention further includes: an instruction or a program stored in the memory 1205 and capable of running on the processor 1204. The processor 1204 invokes the instruction or program in the memory 1205 to execute the method executed by the modules shown in FIG. 8 or FIG. 9, with the same technical effects achieved. To avoid repetition, details are not repeated herein.

An embodiment of this application provides a readable storage medium where a program or instructions are stored in the readable storage medium. When the program or the instructions are executed by a processor, the steps of the transmission parameter determining method of the terminal side according to the embodiments of this application are implemented, or when the program or the instructions are executed by the processor, the steps of the resource determining method of the terminal side according to the embodiments of this application are implemented; or when the program or the instructions are executed by the processor, the steps of the transmission parameter determining method of the network-side device side according to the embodiments of this application are implemented; or when the program or the instructions are executed by the processor, the steps of the resource determining method of the network-side device side according to the embodiments of this application are implemented.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions to implement the processes of the foregoing embodiments of the transmission parameter determining method or the resource determining method, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A transmission parameter determining method, comprising:
receiving, by a terminal, downlink control information DCI, wherein the DCI is used for activating a target configured grant CG, or the DCI is used for scheduling a physical uplink shared channel PUSCH for data of the target CG, and the target CG comprises a plurality of sets of transmission parameters; and
determining, by the terminal, according to the DCI, a target transmission parameter for the target CG or the PUSCH from the plurality of sets of transmission parameters.

2. The method according to claim 1, wherein the method further comprises:
receiving, by the terminal, a configuration delivered by a network side, wherein the configuration comprises at least one of the following:
a sounding reference signal SRS resource set configured for a first DCI format;
an SRS resource set configured for a second DCI format; and
at least one CG; wherein
the DCI is in the first DCI format or the second DCI format; and
the target CG is a CG in the at least one CG.

3. The method according to claim 2, wherein the plurality of sets of transmission parameters are respectively associated with a plurality of SRS resource sets, and
the plurality of SRS resource sets comprise at least one of the following:
an SRS resource set configured for the first DCI format; and
an SRS resource set configured for the second DCI format.

4. The method according to claim 2, wherein in a case that a plurality of SRS resource sets are configured for the first DCI format and one SRS resource set is configured for the second DCI format, the one SRS resource set configured for the second DCI format comprises N SRS resources in a reference SRS resource set, wherein the reference SRS resource set is: the 1st SRS resource set in the plurality of SRS resource sets configured for the first DCI format; and/or
in a case that a target SRS resource set is configured for the first DCI format and a plurality of SRS resource sets are configured for the second DCI format, the 1st SRS resource set configured for the second DCI format comprises N SRS resources in the target SRS resource set, wherein
N is an integer greater than or equal to 1.

5. The method according to claim 4, wherein transmission parameters for the one SRS resource set configured for the second DCI format are partially or completely the same as transmission parameters for the reference SRS resource set; and/or
transmission parameters for the 1st SRS resource set configured for the second DCI format are partially or completely the same as transmission parameters for the target SRS resource set.

6. The method according to claim 4, wherein the one SRS resource set configured for the second DCI format and the reference SRS resource set are activated simultaneously; and/or
the 1 st SRS resource set configured for the second DCI format and the target SRS resource set are activated simultaneously.

7. The method according to claim 4, wherein the 1st SRS resource set in the plurality of SRS resource sets configured for the first DCI format comprises SRS resources with the largest number of first SRS ports, and the SRS resources with the largest number of first SRS ports are SRS resources with the largest number of SRS ports in the plurality of SRS resource sets configured for the first DCI format; and/or
the 1st SRS resource set in the plurality of SRS resource sets configured for the second DCI format comprises SRS resources with the largest number of second SRS ports, and the SRS resources with the largest number of second SRS ports are SRS resources with the largest number of SRS ports in the plurality of SRS resource sets configured for the second DCI format.

8. The method according to claim 4, wherein the 1st SRS resource set in the plurality of SRS resource sets configured for the first DCI format is an SRS resource set with a smallest SRS resource set index in the plurality of SRS resource sets configured for the first DCI format; or in a case that one SRS resource set is configured for the first DCI format, the 1st SRS resource set in the SRS resource sets configured for the first DCI format is the one SRS resource set configured for the first DCI format; and/or
the 1st SRS resource set in the plurality of SRS resource sets configured for the second DCI format is an SRS resource set with a smallest SRS resource set index in the plurality of SRS resource sets configured for the second DCI format; or in a case that one SRS resource set is configured for the second DCI format, the 1st SRS resource set in the SRS resource sets configured for the second DCI format is the one SRS resource set configured for the second DCI format.

9. The method according to claim 2, wherein the method further comprises:
receiving, by the terminal, a media access control control element MAC CE; and
determining, by the terminal, at least one of the following based on the MAC CE:
a spatial relation for SRS resources in the SRS resource set configured for the first DCI format; and
a spatial relation for SRS resources in the SRS resource set configured for the second DCI format.

10. The method according to claim 9, wherein the MAC CE comprises at least one of the following:
an index of the SRS resource set configured for the first DCI format; and
an index of the SRS resource set configured for the second DCI format.

11. The method according to claim 9, wherein spatial relations of SRS resources with a same index in the SRS resource set configured for the first DCI format and the SRS resource set configured for the second DCI format are determined simultaneously.

12. The method according to any one of claims 1 to 11, wherein the DCI comprises a plurality of transmitted precoding matrix indicator TPMI fields;
a length of a first TPMI field in the plurality of TPMI fields is determined based on a largest number of SRS ports in a plurality of SRS resource sets configured for the DCI; and
a length of a second TPMI field in the plurality of TPMI fields is determined based on a largest number of ports for a preset SRS resource set in the plurality of SRS resource sets configured for the DCI.

13. The method according to any one of claims 1 to 11, wherein the determining, by the terminal, according to the DCI, a target transmission parameter for the target CG or the PUSCH from the plurality of sets of transmission parameters comprises at least one of the following:
in a case that the DCI comprises a target field, determining, by the terminal, that a transmission parameter, indicated by the target field, in the plurality of sets of transmission parameters is the target transmission parameter for the target CG or the PUSCH; and
in a case that the DCI does not comprise the target field, determining that a preset transmission parameter in the plurality of sets of transmission parameters is the target transmission parameter for the target CG or the PUSCH.

14. The method according to claim 13, wherein the method further comprises:
determining, by the terminal, whether the DCI comprises the target field, based on the number of SRS resource sets configured for a DCI format of the DCI.

15. The method according to claim 14, wherein in a case that the number of SRS resource sets configured for the DCI format of the DCI is a preset quantity, it is determined that the DCI comprises the target field; or
in a case that the number of SRS resource sets configured for the DCI format of the DCI is not a preset quantity, it is determined that the DCI does not comprise the target field.

16. The method according to claim 13, wherein the preset transmission parameter comprises one of the following:
the 1st set of transmission parameters in the plurality of sets of transmission parameters;
transmission parameters associated with the 1st SRS resource set in the plurality of sets of transmission parameters; and
a transmission parameter indicated by the DCI in the plurality of sets of transmission parameters.

17. The method according to any one of claims 1 to 11, wherein any one set of transmission parameters in the plurality of sets of transmission parameters comprises at least one of the following:
a target received power parameter for control information transmitted on a configured grant;
a closed loop power control adjustment index;
a target received power and path loss compensation factor;
precoding and the number of layers;
an SRS resource indicator; and
a path loss reference index.

18. A resource determining method, comprising:
receiving, by a terminal, downlink control information DCI, wherein the DCI is used for scheduling physical uplink shared channel PUSCH transmission, and the DCI comprises a plurality of sounding reference signal resource indicator SRI fields; and
determining, by the terminal based on the plurality of SRI fields, a sounding reference signal SRS resource corresponding to the PUSCH transmission.

19. The method according to claim 18, wherein the plurality of SRI fields comprise: a first SRI field and a second SRI field;
an SRS resource indicated by the first SRI field is an SRS resource in an SRS resource set corresponding to the first SRI field, wherein the SRS resource is closest to a target resource and is to be transmitted before the target resource;
an SRS resource indicated by the second SRI field is an SRS resource in an SRS resource set corresponding to the second SRI field, wherein the SRS resource is closest to the target resource and is to be transmitted before the target resource; and
the target resource is a transmission resource for the DCI.

20. The method according to claim 19, wherein the SRS resource set corresponding to the first SRI field is an SRS resource set indicated by a target field in the DCI; and
the SRS resource set corresponding to the second SRI field is a preset SRS resource set.

21. The method according to claim 19, wherein a plurality of SRS resource sets are pre-configured for the terminal, and the SRS resource set corresponding to the first SRI field is an SRS resource set, indicated by a target field of the DCI, in the plurality of SRS resource sets; and
the SRS resource set corresponding to the second SRI field is a preset SRS resource set in the plurality of SRS resource sets.

22. A transmission parameter determining method, comprising:
sending, by a network-side device, downlink control information DCI to a terminal, wherein the DCI is used for activating a target configured grant CG, or the DCI is used for scheduling a physical uplink shared channel PUSCH for data of the target CG, and the target CG comprises a plurality of sets of transmission parameters; and
determining, by the network-side device, according to the DCI from the plurality of sets of transmission parameters, a target transmission parameter to be used by the terminal for the target CG or the PUSCH.

23. The method according to claim 22, wherein the method further comprises:
delivering, by the network-side device, a configuration to the terminal, wherein the configuration comprises at least one of the following:
an SRS resource set configured for a first DCI format;
an SRS resource set configured for a second DCI format; and
at least one configured grant CG; wherein
the DCI is in the first DCI format or the second DCI format; and
the target CG is a CG in the at least one CG.

24. The method according to claim 23, wherein the plurality of sets of transmission parameters are respectively associated with a plurality of sounding reference signal SRS resource sets, and
the plurality of SRS resource sets comprise at least one of the following:
an SRS resource set configured for the first DCI format; and
an SRS resource set configured for the second DCI format.

25. The method according to claim 23, wherein in a case that a plurality of SRS resource sets are configured for the first DCI format and one SRS resource set is configured for the second DCI format, the one SRS resource set configured for the second DCI format comprises N SRS resources in a reference SRS resource set, wherein the reference SRS resource set is: the 1st SRS resource set in the plurality of SRS resource sets configured for the first DCI format; and/or
in a case that a target SRS resource set is configured for the first DCI format and a plurality of SRS resource sets are configured for the second DCI format, the 1st SRS resource set configured for the second DCI format comprises N SRS resources in the target SRS resource set, wherein
N is an integer greater than or equal to 1.

26. The method according to claim 25, wherein transmission parameters for the one SRS resource set configured for the second DCI format are partially or completely the same as transmission parameters for the reference SRS resource set; and/or
transmission parameters for the 1st SRS resource set configured for the second DCI format are partially or completely the same as transmission parameters for the target SRS resource set.

27. The method according to claim 25, wherein the 1st SRS resource set in the plurality of SRS resource sets configured for the first DCI format comprises SRS resources with the largest number of first SRS ports, and the SRS resources with the largest number of first SRS ports are SRS resources with the largest number of SRS ports in the plurality of SRS resource sets configured for the first DCI format; and/or
the 1st SRS resource set in the plurality of SRS resource sets configured for the second DCI format comprises SRS resources with the largest number of second SRS ports, and the SRS resources with the largest number of second SRS ports are SRS resources with the largest number of SRS ports in the plurality of SRS resource sets configured for the second DCI format.

28. The method according to claim 27, wherein the 1st SRS resource set in the plurality of SRS resource sets configured for the first DCI format is an SRS resource set with a smallest SRS resource set index in the plurality of SRS resource sets configured for the first DCI format; or in a case that one SRS resource set is configured for the first DCI format, the 1st SRS resource set in the SRS resource sets configured for the first DCI format is the one SRS resource set configured for the first DCI format; and/or
the 1st SRS resource set in the plurality of SRS resource sets configured for the second DCI format is an SRS resource set with a smallest SRS resource set index in the plurality of SRS resource sets configured for the second DCI format; or in a case that one SRS resource set is configured for the second DCI format, the 1st SRS resource set in the SRS resource sets configured for the second DCI format is the one SRS resource set configured for the second DCI format.

29. The method according to claim 23, wherein the method further comprises:
sending, by the network-side device, a media access control control element MAC CE to the terminal; wherein
the MAC CE is used for determining at least one of the following:
a spatial relation for SRS resources in the SRS resource set configured for the first DCI format; and
a spatial relation for SRS resources in the SRS resource set configured for the second DCI format.

30. The method according to claim 29, wherein the MAC CE comprises at least one of the following:
an index of the SRS resource set configured for the first DCI format; and
an index of the SRS resource set configured for the second DCI format.

31. The method according to claim 29, wherein spatial relations of SRS resources with a same index in the SRS resource set configured for the first DCI format and the SRS resource set configured for the second DCI format are determined simultaneously.

32. The method according to any one of claims 22 to 31, wherein the DCI comprises a plurality of transmitted precoding matrix indicator TPMI fields;
a length of a first TPMI field in the plurality of TPMI fields is determined based on a largest number of SRS ports in a plurality of SRS resource sets configured for the DCI; and
a length of a second TPMI field in the plurality of TPMI fields is determined based on a largest number of ports for a preset SRS resource set in the plurality of SRS resource sets configured for the DCI.

33. The method according to any one of claims 22 to 31, wherein the determining, by the network-side device, according to the DCI from the plurality of sets of transmission parameters, a target transmission parameter to be used by the terminal for the target CG or the PUSCH comprises at least one of the following:
in a case that the DCI comprises a target field, determining, by the network-side device, that a transmission parameter indicated by the target field in the plurality of sets of transmission parameters is the target transmission parameter to be used by the terminal for the target CG or the PUSCH; and
in a case that the DCI does not comprise the target field, determining, by the network-side device, that a preset transmission parameter in the plurality of sets of transmission parameters is the target transmission parameter to be used by the terminal for the target CG or the PUSCH.

34. The method according to claim 33, wherein the preset transmission parameter comprises one of the following:
the 1st set of transmission parameters in the plurality of sets of transmission parameters;
transmission parameters associated with the 1st SRS resource set in the plurality of sets of transmission parameters; and
a transmission parameter indicated by the DCI in the plurality of sets of transmission parameters.

35. The method according to any one of claims 22 to 31, wherein any one set of transmission parameters in the plurality of sets of transmission parameters comprises at least one of the following:
a target received power parameter for control information transmitted on a configured grant;
a closed loop power control adjustment index;
a target received power and path loss compensation factor;
precoding and the number of layers;
an SRS resource indicator; and
a path loss reference index.

36. A resource determining method, comprising:
sending, by a network-side device, downlink control information DCI to a terminal, wherein the DCI is used for scheduling physical uplink shared channel PUSCH transmission, the DCI comprises a plurality of sounding reference signal resource indicator SRI fields, and the plurality of SRI fields are used for determining a sounding reference signal SRS resource corresponding to the PUSCH transmission.

37. The method according to claim 36, wherein the plurality of SRI fields comprise: a first SRI field and a second SRI field;
an SRS resource indicated by the first SRI field is an SRS resource in an SRS resource set corresponding to the first SRI field, wherein the SRS resource is closest to a target resource and is to be transmitted before the target resource;
an SRS resource indicated by the second SRI field is an SRS resource in an SRS resource set corresponding to the second SRI field, wherein the SRS resource is closest to the target resource and is to be transmitted before the target resource; and
the target resource is a transmission resource for the DCI.

38. The method according to claim 37, wherein the SRS resource set corresponding to the first SRI field is an SRS resource set indicated by a target field in the DCI; and
the SRS resource set corresponding to the second SRI field is a preset SRS resource set.

39. The method according to claim 37, wherein the network-side device pre-configures a plurality of SRS resource sets for the terminal, and the SRS resource set corresponding to the first SRI field is an SRS resource set, indicated by a target field of the DCI, in the plurality of SRS resource sets; and
the SRS resource set corresponding to the second SRI field is a preset SRS resource set in the plurality of SRS resource sets.

40. A transmission parameter determining apparatus, comprising:
a first receiving module, configured to receive downlink control information DCI, wherein the DCI is used for activating a target configured grant CG, or the DCI is used for scheduling a physical uplink shared channel PUSCH for data of the target CG, and the target CG comprises a plurality of sets of transmission parameters; and
a first determining module, configured to determine, according to the DCI, a target transmission parameter for the target CG or the PUSCH from the plurality of sets of transmission parameters.

41. The apparatus according to claim 40, wherein the apparatus further comprises:
a second receiving module, configured to receive a configuration delivered by a network side, wherein the configuration comprises at least one of the following:
an SRS resource set configured for a first DCI format;
an SRS resource set configured for a second DCI format; and
at least one configured grant CG; wherein
the DCI is in the first DCI format or the second DCI format; and
the target CG is a CG in the at least one CG.

42. A resource determining apparatus, comprising:
a receiving module, configured to receive downlink control information DCI, wherein the DCI is used for scheduling physical uplink shared channel PUSCH transmission, and the DCI comprises a plurality of sounding reference signal resource indicator SRI fields; and
a determining module, configured to determine, based on the plurality of SRI fields, an SRS resource corresponding to the PUSCH transmission.

43. A transmission parameter determining apparatus, comprising:
a first sending module, configured to send downlink control information DCI to a terminal, wherein the DCI is used for activating a target configured grant CG, or the DCI is used for scheduling a physical uplink shared channel PUSCH for data of the target CG, and the target CG comprises a plurality of sets of transmission parameters; and
a determining module, configured to determine, according to the DCI from the plurality of sets of transmission parameters, a target transmission parameter to be used by the terminal for the target CG or the PUSCH.

44. The apparatus according to claim 43, wherein the apparatus further comprises:
a second sending module, configured to deliver a configuration to the terminal, wherein the configuration comprises at least one of the following:
an SRS resource set configured for a first DCI format;
an SRS resource set configured for a second DCI format; and
at least one configured grant CG; wherein
the DCI is in the first DCI format or the second DCI format; and
the target CG is a CG in the at least one CG.

45. A resource determining apparatus, comprising:
a sending module, configured to downlink control information DCI to a terminal, wherein the DCI is used for scheduling physical uplink shared channel PUSCH transmission, the DCI comprises a plurality of sounding reference signal resource indicator SRI fields, and the plurality of SRI fields are used for determining a sounding reference signal SRS resource corresponding to the PUSCH transmission.

46. A terminal, comprising a processor, a memory, and a program or instructions stored in the memory and capable of running on the processor, wherein when the program or the instructions are executed by the processor, the steps of the transmission parameter determining method according to any one of claims 1 to 17 are implemented, or when the program or the instructions are executed by the processor, the steps of the resource determining method according to any one of claims 18 to 21 are implemented.

47. A network-side device, comprising a processor, a memory, and a program or instructions stored in the memory and capable of running on the processor, wherein when the program or the instructions are executed by the processor, the steps of the transmission parameter determining method according to any one of claims 22 to 35 are implemented, or when the program or the instructions are executed by the processor, the steps of the resource determining method according to any one of claims 36 to 39 are implemented.

48. A readable storage medium, wherein the readable storage medium stores a program or instructions, and when the program or the instructions are executed by a processor, the steps of the transmission parameter determining method according to any one of claims 1 to 17 are implemented, or the steps of the resource determining method according to any one of claims 18 to 21 are implemented; or when the program or the instructions are executed by a processor, the steps of the transmission parameter determining method according to any one of claims 22 to 35 are implemented, or the steps of the resource determining method according to any one of claims 36 to 39 are implemented.
